# EUROPEAN PATENT APPLICATION

(11) **EP 4 776 367 A1**
(43) Date of publication of application: **15.07.2026**
(21) Application number: 24933174.5
(22) Date of filing: 25.11.2024
(51) Int. Cl.: H01M 10/0525, H01M 4/02, H01M 4/36, H01M 4/525, H01M 4/04, H01M 10/058

(54) **BATTERY CELL AND PREPARATION METHOD THEREFOR, AND LITHIUM-ION BATTERY**

(30) Priority: 17.10.2024 CN 202411453779
(71) Applicant: ZHEJIANG LIWINON ENERGY TECHNOLOGY CO., LTD., Jinhua, Zhejiang 321102 (CN)
(72) Inventor: HUANG, Xu, Jinhua, Zhejiang 321102 (CN); WEI, Xiaoliang, Jinhua, Zhejiang 321102 (CN); TAN, Yuangao, Jinhua, Zhejiang 321102 (CN); WU, Shengben, Jinhua, Zhejiang 321102 (CN); XIANG, Haibiao, Jinhua, Zhejiang 321102 (CN)
(74) Representative: Appleyard Lees IP LLP
(86) International application number: PCT/CN2024/134302
(87) International publication number: WO 2026/081300

(57) **Abstract**

A battery cell and a preparation method thereof, and a lithium-ion battery are disclosed, relating to the technical field of secondary battery materials. In the battery cell provided, a safety coating is introduced into the positive electrode sheet and the capacity contributed by the first active material in the safety coating is limited. The first active material not only reduces the possibility of contact between the positive electrode and negative electrode, enhancing the mechanical safety performance of the battery cell, but also contributes a certain capacity, thus lowering the N/P ratio (the ratio of negative electrode capacity to positive electrode capacity) of the battery cell, reducing the potential of the positive electrode in a fully charged state, and improving the thermal abuse performance and cycling performance of the battery. Ultimately, by defining the relevant parameters, the present disclosure provides a battery cell that exhibits good mechanical safety performance, good thermal chamber performance, good cycling performance, and improved low-temperature discharge performance and cycling performance.

## Description

### TECHNICAL FIELD

The present disclosure relates to the technical field of secondary battery materials, in particular to a battery cell, a preparation method thereof and a lithium-ion battery.

### BACKGROUND

Lithium-ion batteries are widely used in products such as 3C electronics (computer, communication and consumer), electric vehicles, and power tools due to their various advantages, such as high energy density, lack of memory effect, long cycle life, environmental friendliness, and adaptability to various environments.

In practical applications, there are increasing demands for mechanical safety tests, such as nail penetration test, and thermal abuse safety tests, such as thermal chamber tests for lithium-ion batteries. To improve the mechanical safety performance of battery cells, the measure of coating a safety coating on the positive electrode current collector is commonly used in the battery industry. The safety coating typically contains a certain proportion of inorganic fillers, conductive agents, and binders, however, the conventional safety coating does not effectively improve the thermal abuse safety performance of the battery cells. To improve the thermal abuse safety performance of battery cells, methods, including doping and coating the active materials of the positive and negative electrodes or developing electrolytic solutions with high thermal stability are most used. However, these methods have drawbacks, including long development cycles and high costs.

Therefore, it is of great significance to provide a battery cell that can improve mechanical safety performance, thermal chamber performance, and cycling performance without changing the existing process, while also enhancing low-temperature discharge performance and rate discharge performance. The battery cell can address the current issue where conventional improvement measures fail to simultaneously and effectively improve both the mechanical safety performance and thermal abuse safety performance of the battery cell.

### SUMMARY

The present disclosure aims to solve at least one of the technical problems present in existing technology. For this propose, the present disclosure provides a battery cell, a preparation method thereof and a lithium-ion battery, aimed at solving the problem where current conventional improvement measures fail to simultaneously and effectively improve both the mechanical safety performance and thermal abuse safety performance of the battery cell.

According to a first aspect of the present disclosure, a battery cell is provided, which comprises: a positive electrode sheet and a negative electrode sheet; the positive electrode sheet comprises a safety coating and a positive electrode active material layer, the safety coating comprises a first active material and a dispersant, and the positive electrode active material layer comprises a positive electrode active material; and the negative electrode sheet comprises a negative electrode active material layer, and the negative electrode active material layer comprises a negative electrode active material;
wherein the battery cell has a first capacity ratio NP1 satisfying 1.019 ≤ NP₁ ≤ 1.089 and a relative capacity ratio ΔNP satisfying 0.002 ≤ ΔNP ≤ 0.04;
a calculation formula for the first capacity ratio NP₁ is: NP₁ = C₀/ C₂ - ΔNP, and a calculation formula for the relative capacity ratio ΔNP is: ΔNP = C₀×C₁/ (C₂×(C₁+C₂))-0.05;
C₁ is a capacity contributed by the first active material in the safety coating per unit area, calculated as: C₁ = k×c_{w} ×a, where 0 < k < 1, 0 < a ≤ 300, c_{w} is a single-sided coating areal density of the safety coating, a is a theoretical gram capacity of the first active material, and k is a constant;
C₂ is a capacity contributed by the positive electrode active material in the positive electrode active material layer per unit area; and
C₀ is a capacity contributed by the negative electrode active material in the negative electrode active material layer per unit area.

The battery cell according to an embodiment of the present disclosure has at least the following beneficial effects: in the battery cell provided by the present disclosure, a safety coating is introduced into the positive electrode sheet and the capacity contributed by the first active material in the safety coating is limited, which not only allows for balancing the mechanical safety performance, thermal chamber performance, and cycling performance of the battery cell without changing the existing processes, but also allows for enhancing low-temperature discharge performance and rate discharge performance.

In the present disclosure, C₁ is defined as the capacity contributed by the first active material in the safety coating per unit area, calculated as: C₁ = k×c_{w}×a, where 0 < k < 1, 0 < a ≤ 300, c_{w} is a single-sided coating areal density of the safety coating, a is the theoretical gram capacity of the first active material, and k is the constant related to the battery cell system and discharge depth. Generally, the larger the value of a, the poorer the stability of the active material. In the present disclosure, a is limited to 0 < a ≤ 300, which ensures good thermal stability of the first active material, minimizes the risk of structural collapse or deformation, and reduces the risk of decomposition during the mechanical abuse tests on the battery cell such as nail penetration test, thereby lowering the risk of thermal runaway and enhancing battery safety. Furthermore, the first active material not only reduces the possibility of contact between the positive electrode and the negative electrode, and enhances the mechanical safety performance of the battery cell, but also contributes a certain capacity, thus lowering a N/P ratio (a ratio of negative electrode capacity to positive electrode capacity) of the battery cell, reducing a potential of the positive electrode in a fully charged state, and improving thermal abuse performance and cycling performance of the battery cell. In addition, C₂ is defined as the capacity contributed by the positive electrode active material in the positive electrode active material layer per unit area, and C₀ is the capacity contributed by the negative electrode active material in the negative electrode active material layer per unit area. In the present disclosure, a ratio of C₀ to C₂ is defined as the N/P ratio (the ratio of negative electrode capacity to positive electrode capacity, N/P ratio = C₀/C₂). A change in NP value caused by the introduction of the safety coating is defined as ΔNP (relative capacity ratio), calculated as: ΔNP = C₀×C₁/ (C₂×(C₁+C₂))-0.05, and a corresponding capacity ratio of the battery cell is NP₁, calculated as: NP₁ = C₀/C₂ - ΔNP. In the present disclosure, a range of ΔNP is limited to 0.002 ~ 0.04. When ΔNP is below 0.002, the corresponding c_{w} is relatively small, which makes processing difficult, has minimal adjustment on NP values, and has a thin safety coating , thus adversely affecting the mechanical safety performance of the battery cell. When ΔNP exceeds 0.04, the corresponding c_{w} is relatively large, which negatively impacts the energy density of the battery cell. In the present disclosure, a range of NP1 is also limited, when NP1 is less than 1.019, it indicates that the capacity of the negative electrode is lower than that of the positive electrode, and there is a risk of lithium evolution in the battery cell; when NP1 exceeds 1.089, it indicates that the negative electrode has sufficient margin, which can lead to greater irreversible lithium loss during formation, reduce the first cycle coulombic efficiency of the battery cell, and low the energy density of the battery cell duce to insufficient utilization of the negative electrode. This can also deepen the charging depth of the positive electrode, raising its potential in a fully charged state, thereby worsening the cycling performance and thermal chamber performance of the battery cell. Considering the need to leave a certain margin to deal with process fluctuations, the range of NP1 is limited to 1.019 ~ 1.089 in the present disclosure.

Ultimately, by defining the relevant parameters, the present disclosure provides a battery cell that exhibits good mechanical safety performance, good thermal chamber performance, good cycling performance, and improved low-temperature discharge performance and cycling performance.

In the present disclosure, C₁ is the capacity contributed by the first active material in the safety coating per unit area, C₂ is the capacity contributed by the positive electrode active material in the positive electrode active material layer per unit area, and C₀ is the capacity contributed by the negative electrode active material in the negative electrode active material layer per unit area. The phrase "per unit area" can refer to "per square meter", "per square centimeter", "per square millimeter", or any other suitable unit, as long as C₁, C₂, and C₀ are consistent in units. Since the calculation formula for the relative capacity ratio ΔNP is: ΔNP = C₀×C₁/ (C₂×(C₁+C₂))-0.05, and the calculation formula for the first capacity ratio NP1 is: NP₁ = C₀/ C₂ - ΔNP, it can be seen that the units of C₁, C₂, and C₀ do not affect the values of ΔNP or NP₁.

In some embodiments of the present disclosure, the first capacity ratio NP₁ of the battery cell satisfies 1.028 ≤ NP₁ ≤ 1.053.

In some embodiments of the present disclosure, the calculation formula for C₁ is: C₁ = k×c_{w}×a, where 0 < k < 1, 0 < a ≤ 300, c_{w} is a single-sided coating areal density of the safety coating, a is the theoretical gram capacity of the first active material (a constant), and k is a constant related to the battery cell system and discharge depth. Preferably, 100 ≤ a ≤ 200. When a is greater than 200, the stability of the active material is poor; when a is less than 100, additional amounts of the first active material are required to achieve the same N/P ratio.

In some embodiments of the present disclosure, a range of c_{w} is 3 mg/1540.25mm² to 18 mg/1540.25mm². The present disclosure has found that when c_{w} is less than 3 mg/1540.25 mm², it does not affect the NP value of the system and makes processing difficult, and as the safety coating becomes too thin, it adversely affects the mechanical safety performance of the battery cell. Conversely, when c_{w} exceeds 18 mg/1540.25 mm², there is no further improvement in the safety performance of the battery cell (the pass rate for nail penetration test has already reached 100% at a value below 18 mg/1540.25 mm²), and it negatively impacts the energy density of the battery cell. Based on the above considerations, the range of c_{w} in the present disclosure is 3 mg/1540.25mm² to 18 mg/1540.25mm².

In some embodiments of the present disclosure, the first active material includes one or more of lithium cobalt oxide, lithium manganese oxide, lithium iron phosphate, lithium manganese iron phosphate, and a ternary material, preferably one or more of lithium iron phosphate, lithium manganese phosphate, and lithium manganese iron phosphate, which are active materials with good thermal stability. The active materials with good thermal stability have a very stable olivine-type crystal structure, making them less prone to structural collapse or deformation. During mechanical abuse tests such as nail penetration test of the battery cell, the active materials with good thermal stability are also less likely to decompose, thereby reducing the risk of thermal runaway of the battery cell and improving the safety of the battery. Furthermore, the first active material can also contribute a certain capacity, which helps to lower the N/P ratio (the ratio of negative electrode capacity to positive electrode capacity) of the battery cell, reduces the potential of the positive electrode in a fully charged state, and improves the thermal abuse performance and cycling performance of the battery.

In some embodiments of the present disclosure, the first active material has a median particle size Dᵥ₅₀ of 0.1 µm to 15 µm, and a specific surface area of 2 m²/g to 50 m²/g. If the median particle size Dᵥ₅₀ is less than 0.1 µm, or if the specific surface area exceeds 50 m²/g, agglomeration is likely to occur during slurry stirring. If Dᵥ₅₀ is greater than 15 µm or if the specific surface area is less than 2 m²/g, the larger particle size makes it difficult to achieve a thinner safety coating, which affects the energy density of the battery cell and may lead to primer coating skips when coating the safety coating, thereby affecting the safety of the battery cell.

In some embodiments of the present disclosure, the battery cell comprises at least one of the following:
A1) the first active material is a ternary material, which comprises at least one of a nickel-cobalt-manganese ternary material and a nickel-cobalt-aluminum ternary material;
A2) when A1) is included, the nickel-cobalt-manganese ternary material comprises at least one of NCM333, NCM523, NCM613, NCM622, and NCM811;
A3) a surface of the first active material is coated with an inorganic ceramic material; and
A4) when A3) is included, the inorganic ceramic material comprises silicon dioxide, aluminium oxide, or titanium oxide.

In some embodiments of the present disclosure, the ternary material include at least one of a nickel-cobalt-manganese (NCM) ternary material and a nickel-cobalt-aluminum (NCA) ternary material. The ternary material used in the present disclosure can be common ternary material known in the art, and it is not limited herein. For example, the nickel-cobalt-manganese ternary material may include at least one of NCM333, NCM523, NCM613, NCM622, and NCM811.

In some embodiments of the present disclosure, a surface of the first active material is coated with an inorganic ceramic material.

In some embodiments of the present disclosure, the inorganic ceramic material includes silicon dioxide, aluminium oxide, or titanium oxide.

The first active material can undergo a coating process, wherein a layer of inorganic ceramic material such as silicon dioxide, aluminium oxide, or titanium oxide is coated on its particle surface. These ceramic materials can inhibit the migration of free lithium ions from the surface of the first active material into the solution, lower a pH of the coating slurry, and reduce the corrosion of the aluminum foil current collector.

In some embodiments of the present disclosure, the dispersant comprises one or more of an ionic dispersant, a non-ionic dispersant, an amphoteric dispersant, and a fluorinated surfactant.

In some embodiments of the present disclosure, the ionic dispersant comprises one or more of polyacrylic acid and salts thereof, sodium dodecyl benzene sulfonate, sodium dodecyl sulfate, and polyethyleneimine.

In some embodiments of the present disclosure, the non-ionic dispersant comprises one or more of polyvinyl pyrrolidone, polyethylene glycol, polyvinyl alcohol, polyethylene oxide, and carboxymethyl cellulose.

In some embodiments of the present disclosure, the amphoteric dispersant comprises betaine.

Due to the insolubility of the first active material in water, its small particle size, and large specific surface area, agglomeration easily occurs during stirring and dispersion, making it necessary to add a dispersant. The dispersant can improve the dispersion of the poorly dispersible first active material in the slurry. The dispersant may be one or more of the following: an ionic dispersant, such as polyacrylic acid (PAA) and salts thereof, sodium dodecyl benzene sulfonate (SDBS), sodium dodecyl sulfate (SDS), and polyethyleneimine (PEI); a non-ionic dispersant, such as polyvinyl pyrrolidone (PVP), polyethylene glycol (PEG), polyvinyl alcohol (PVA), polyethylene oxide (POE), and carboxymethyl cellulose (CMC); an amphoteric dispersant, such as betaine; and a fluorinated surfactant. The dispersant can reduce the mutual attraction between inorganic filler particles, thereby improving the dispersion of the particles in the slurry. Good dispersion can ensure that the inorganic filler particles are evenly distributed, reduce agglomeration, lower the viscosity of the slurry, improve coating uniformity, and enhance the electrochemical performance of the battery cell. Preferably, the dispersant is polyacrylic acid (PAA) and salts thereof, or polyvinyl pyrrolidone (PVP).

In some embodiments of the present disclosure, the safety coating further comprises a first conductive agent, a first binder, and an inorganic filler.

In some embodiments of the present disclosure, the safety coating satisfies at least one of the following:
B1) a mass ratio of the first conductive agent, the first binder, the inorganic filler, the first active material, and the dispersant is 0.5-5: 1-21.2: 1-50: 1-95: 0.01-1;
B2) the inorganic filler has a median particle size Dᵥ₅₀ of 0.1 µm to 5 µm, and a specific surface area of 8 m²/g to 15 m²/g;
B3) the inorganic filler comprises one or more of aluminium oxide, boehmite, aluminum hydroxide, magnesium hydroxide, silicon dioxide, and titanium dioxide; and
B4) the first binder comprises one or more of a polyvinylidene fluoride binder, a sodium carboxymethyl cellulose binder, and a polyacrylate-based binder.

In some embodiments of the present disclosure, a mass ratio of the first conductive agent, the first binder, the inorganic filler, the first active material, and the dispersant is 0.5-5: 1-21.2: 1-50: 1-95: 0.01-1. For example, in parts by weight, the first conductive agent can be 0.5 to 5 parts, preferably 1.5 to 3 parts; the first binder can be 1 to 21.2 parts, preferably 5 to 15 parts; the inorganic filler can be 1 to 50 parts; the first active material can be 1 to 95 parts; and the dispersant can be 0.01 to 1 part.

In some embodiments of the present disclosure, the inorganic filler has a median particle size Dᵥ₅₀ of 0.1 µm to 5 µm, and a specific surface area of 8 m²/g to 15 m²/g. When the Dᵥ₅₀ of the inorganic filler is less than 0.1 µm or the specific surface area exceeds 15 m²/g, agglomeration of the inorganic filler easily occurs, making dispersion of the inorganic filler difficult. Conversely, when the Dᵥ₅₀ exceeds 5 µm or the specific surface area is less than 8 m²/g, the larger particle size makes it difficult to achieve a thinner safety coating, which may affect the energy density of the battery cell and may lead to primer coating skips when coating the safety coating, thereby affecting the safety of the battery cell. When the median particle size and specific surface area of the inorganic filler fall within the specified ranges above, a better balance can be achieved between the processability of the safety coating and the energy density of the battery cell.

In some embodiments of the present disclosure, the inorganic filler includes one or more of aluminium oxide, boehmite, aluminum hydroxide, magnesium hydroxide, silicon dioxide, or titanium dioxide. Boehmite is preferably used. Compared to other inorganic fillers, boehmite is not only cost-effective but also has a lower Rockwell hardness, resulting in less wear on the engraved rollers, thereby reducing manufacturing costs.

In some embodiments of the present disclosure, a mass fraction of the inorganic filler in the safety coating is 1% to 50%.

In some embodiments of the present disclosure, the first binder includes one or more of a polyvinylidene fluoride (PVDF) binder, a sodium carboxymethyl cellulose (CMC) binder, or a polyacrylate (PAA)-based binder.

In some preferred embodiments of the present disclosure, the first binder is a polyacrylate-based binder, which can reduce the corrosion of the active material on aluminum foil, has good bonding performance, is cost-effective, and uses deionized water as a solvent, making it environmentally friendly.

In some embodiments of the present disclosure, the polyacrylate-based binder has a structural formula of: 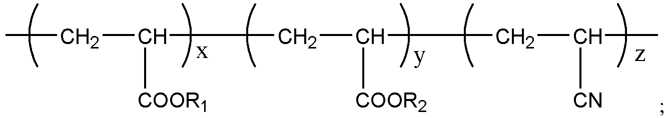
wherein, R₁ is independently H, Li, or Na at each occurrence;
R₂ is independently substituted or unsubstituted C₁-C₁₀ alkyl at each occurrence; and
5 ≤ (x + z)/y ≤ 20, 1.2 ≤ z/ x ≤ 2, where x, y, and z are not 0.

The polyacrylate-based binder provided by the present disclosure achieves good bonding performance by limiting the contents of cyano groups (-CN), ester groups (-COOR₂), and carboxylate groups (-COOR₁) in the binder molecular chain. Moreover, the binder is water-soluble, and uses water as a solvent, which eliminates the need for harmful organic solvents like NMP, and makes it non-toxic to humans and environmentally friendly. Besides, the polyacrylate-based binder is abundant in supply, cost-effective, and widely used in industrial production. By introducing the polyacrylate-based binder as a raw material for water-based safety coating in an electrode sheet, its excellent bonding performance ensures that the safety coating adheres firmly to the surface of the current collector, which not only reduces surface contact resistance but also minimizes the generation of burrs on the current collector during safety testing of the battery cell, thereby reducing the risk of short circuits between the burrs and unstable active materials in the charged state, and enhancing the safety of the battery cell. Furthermore, by controlling the molecular weight of the binder and the contents of cyano groups, ester groups, and carboxylate groups in the molecular chain, it is possible to adjust the electrolytic solution absorption rate of the binder, significantly improving the rate capability, high-temperature discharge performance andlow-temperature discharge performance of the battery cell, as well as enhancing the safety performance and cycling performance of the battery.

In the binder provided by the present disclosure, the molecular chain contains cyano groups (-CN, accounting for a fraction of n1 among all side chain groups, and n₁ = z/ (x+y+z)), carboxylate groups (-COOR₁, wherein R₁ is independently H, Li, or Na at each occurrence, accounting for a fraction of n₂ among all side chain groups, and n₂ = x/ (x+y+z)), and ester groups (-COOR₂, wherein R₂ is independently substituted or unsubstituted C₁-C₁₀ alkyl at each occurrence, accounting for a fraction of n₃ among all side chain groups, and n₃ = y/ (x+y+z)), wherein n₁ + n₂ + n₃ = 1.

The -CN group is a strongly polar group that has good electrolytic solution affinity and electrochemical stability, providing significant bonding strength. However, due to nature of this group, it cannot accommodate the significant volume changes that occur during the intercalation/deintercalation of lithium ions in the active material.

The -COOR₁ group carries a negative charge, causing mutual repulsion between the groups, which facilitates the extension of binder molecules and promotes uniform dispersion of the conductive agents, while also regulating the swelling degree of the binder in the electrolytic solution. This helps to reduce the erosion caused by the dissolution of the binder in the electrolytic solution, thus maintaining better bonding capability and bonding effectiveness.

The -COOR₂ group has a polarity and a solubility parameter that are close to those of carbonate-based solvents in the electrolytic solution, facilitating moderate absorption of the electrolytic solution by the binder. The absorption of the electrolytic solution plasticizes the binder, providing it with elasticity and flexibility to adapt to the periodic volume changes of the electrode active material during the lithium ion intercalation/deintercalation in charge and discharge process. Additionally, the absorption of the electrolytic solution also enhances the ionic conductivity of the water-based safety coating, promoting improvement of the low-temperature discharge performance of the battery cell.

The binder is an essential component for maintaining the integrity of an electrode sheet and is crucial for improving the specific capacity and cycle stability of the battery. Polyacrylic acid has been used as a binder for both the positive electrode and negative electrode of lithium batteries due to its high content of polar functional groups, water solubility, and good adhesion. However, the polar groups in polyacrylic acid lead to hydrogen bonding between molecular chains, which results in increased chain rigidity, and is detrimental to maintaining the integrity of the electrode sheets during charge and discharge processes. Therefore, it is crucial to control the number of functional groups in polyacrylic acid, alter the types of functional groups, and modify the molecular chain structure of polyacrylic acid to enhance the electrochemical performance of lithium batteries. In the present disclosure, the contents of cyano groups, ester groups, and carboxylate groups in the molecular chain of the binder are limited as follows: (1) 1.2 ≤ z/ x ≤ 2, that is n₁ and n₂ satisfy 1.2 ≤ n₁/ n₂ ≤ 2; if n₁/n₂ < 1.2, it may lead to insufficient bonding strength of the binder; conversely, if n₁/n₂ > 2, the molecular chain presents a coiled conformation, which is not conducive to the dispersion of the conductive agent, and the binder becomes more susceptible to swelling by the electrolytic solution; and (2) 5 ≤ (x + z)/ y ≤ 20, that is n₁, n₂, and n₃ satisfy 5 ≤ (n₁ + n₂)/ n₃ ≤ 20; if (n₁ + n₂)/ n₃ < 5, the binder contains excessive -COOR₂ groups, and will absorb too much electrolytic solution, which may lead to a rapid decrease in bonding strength, reduced elasticity, and deteriorated performance of the battery cell; if (n₁ + n₂)/ n₃ > 20, the content of -COOR₂ in the binder is too low, resulting in insufficient elasticity of the binder, lower ionic conductivity of the water-based safety coating, and significantly reduced low-temperature discharge performance and rate discharge performance of the battery cell. Ultimately, the present disclosure achieves good bonding strength and adjusts the electrolytic solution absorption rate of the binder by adjusting the contents of cyano groups, ester groups, and carboxylate groups in the molecular chain of the binder, thereby enhancing the rate and high-temperature discharge performance and low-temperature discharge performance of the battery cell.

In some embodiments of the present disclosure, R₂ is independently C₁-C₁₀ linear alkyl, C₁-C₁₀ branched alkyl, or C₁-C₁₀ cycloalkyl at each occurrence, preferably C₁-C₁₀ linear alkyl, and more preferably C₁-C₄ alkyl.

In some embodiments of the present disclosure, the polyacrylate-based binder has an electrolytic solution absorption rate "c" at 80°C of 10% to 50%, for example, c can be 10% to 20%, 20% to 30%, 30% to 40%, or 40% to 50%.

The present disclosure adjusts the electrolytic solution absorption rate of the binder by limiting the contents of cyano groups, ester groups, and carboxylate groups in the molecular chain of the binder, ensuring that the electrolytic solution absorption rate c at 80°C satisfies 10% ≤ c ≤ 50%. If c < 10%, the binder absorbs insufficient electrolytic solution, which results in poor elasticity and cannot buffer the periodic volume changes caused by the intercalation/deintercalation of lithium ions in the active material; consequently, the ionic conductivity of the water-based safety coating is low, leading to deteriorated low-temperature discharge performance and rate discharge performance of the battery cell. If c > 50%, the binder absorbs excessive electrolytic solution, causing the water-based safety coating to swell, reducing bonding strength, increasing internal resistance, and consequently leading to performance deterioration of the battery cell.

In some embodiments of the present disclosure, the polyacrylate-based binder has a weight-average molecular weight M_{w} of 200,000 to 500,000, such as, 200,000, 250,000, 300,000, 350,000, 400,000, 450,000, or 500,000.

In some embodiments of the present disclosure, the polyacrylate-based binder has a number-average molecular weight Mₙ of 100,000 to 400,000, such as, 100,000, 150,000, 200,000, 250,000, 300,000, 350,000, or 400,000.

In some embodiments of present disclosure, for the the polyacrylate-based binder, a ratio of the weight-average molecular weight M_{w} to the number-average molecular weight Mₙ satisfies M_{w}/Mₙ ≤ 3, preferably, M_{w}/Mₙ is 1.5 to 1.9.

If the molecular weight of the binder is too low, not only the bonding strength is insufficient, but it will also lead to increased usage of the binder. Conversely, if the molecular weight is too high, it will result in excessive viscosity, making processing difficult. If M_{w}/Mₙ > 3, it indicates that the molecular weight distribution of the binder is too large, which worsen the performance of the water-based safety coating.

In some embodiments of the present disclosure, the safety coating has a mass fraction of polyacrylate-based binder of 1 wt% to 21.2 wt%, preferably 5 wt% to 15 wt%. If the content of binder in the safety coating is less than 1%, the bonding strength of the safety coating is insufficient, leading to peeling off during subsequent use. If the content of binder exceeds 21.2%, it will result in processing difficulties during gravure printing of the safety coating and also worsen the internal resistance of the battery cell. When the content of binder is between 1% and 21.2%, it can adjust a pH of the slurry to below 8.5, thereby reducing the corrosion of the aluminum foil current collector by the alkaline aqueous solution of the active material.

The above polyacrylate-based binder can be prepared by conventional methods in the art, for example, by any one of emulsion polymerization, solution polymerization, bulk polymerization, and suspension polymerization.

In a specific embodiment, the present disclosure further provides a preparation method for the above polyacrylate-based binder, comprising the following steps:
S1. adding a dispersing medium to a reaction vessel and removing oxygen;
S2. adding a certain amount of acrylonitrile, a monomer A providing -COOR₁ group, and a monomer B providing-COOR₂ group to the reaction vessel according to a ratio of x, y, and z;
S3. adding an initiator and heating to initiate a reaction; and
S4. after the reaction, subjecting a reaction product to filtering, drying, crushing, and sieving to obtain the polyacrylate-based binder.

In some embodiments of the present disclosure, the monomer A includes at least one of acrylic acid, lithium acrylate, or sodium acrylate, but is not limited to these. The purpose of adding monomer A is to provide -COOR₁ group, where R₁ is H, Li, or Na. Those skilled in the art may independently choose suitable monomer A as needed, and such choices should be considered as reasonable variations within the scope of the present disclosure.

In some embodiments of the present disclosure, the monomer B includes at least one of methyl acrylate, ethyl acrylate, or butyl acrylate, but is not limited to these; the monomer B may be at least one of C₁-C₁₀ acrylates. The purpose of adding monomer B is to provide -COOR₂ group, where R₂ is substituted or unsubstituted C₁-C₁₀ alkyl. Those skilled in the art may independently choose suitable monomer B as needed, and such choices should be considered as reasonable variations within the scope of the present disclosure.

In some embodiments of the present disclosure, in step S1, distilled water is added to the reaction vessel, stirring is initiated, and high-purity nitrogen is introduced for removing oxygen.

In some embodiments of the present disclosure, in step S2, after adding the acrylonitrile, the monomer A providing -COOR₁ group, and the monomer B providing -COOR₂ group, a resulting mixture is heated to 65 °C under an inert atmosphere and maintained at that temperature.

In some embodiments of the present disclosure, the initiator includes 20% ammonium persulfate, but is not limited to this.

In some embodiments of the present disclosure, the safety coating has a mass fraction of the first conductive agent of 0.5% to 5%, preferably 1% to 3.5%. If the content of the conductive agent is too low, it will result in a higher film resistance of the water-based safety coating, leading to poor cycling performance of the battery cell; if the content is too high, it will result in a lower film resistance of the water-based safety coating, adversely affecting the safety of the battery cell. When the content of the conductive agent is between 0.5 wt% and 5 wt%, it can balance both safety and cycling performance.

In some embodiments of the present disclosure, the first conductive agent includes at least one of acetylene black, graphene, graphdiyne, carbon nanotubes, carbon fibers, or conductive carbon black. In the present disclosure, there are no special requirements on the first conductive agent, and conventional conductive agents in the art are suitable, such as conductive carbon black or carbon nanotubes, more specifically, Timcal SUPER P Li conductive carbon black.

In some embodiments of the present disclosure, the positive electrode sheet further comprises a positive electrode current collector, and the safety coating is coated to at least one side surface of the positive electrode current collector. The positive electrode active material layer is coated on one side surface of the safety coating facing away from the positive electrode current collector and/or on one side surface of the positive electrode current collector facing away from the safety coating.

In some embodiments of the present disclosure, the negative electrode sheet further comprises a negative electrode current collector, and the negative electrode active material layer is coated on at least one side surface of the negative electrode current collector.

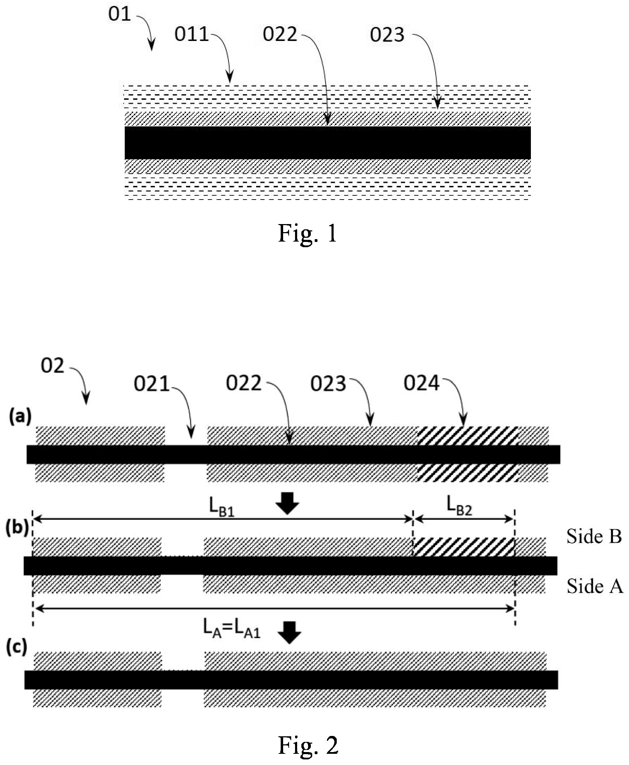

The positive electrode sheet provided by the present disclosure has a safety coating positioned closer to the current collector, structured as "current collector - safety coating - active material layer", as shown in Fig.1. In Fig.1, the positive electrode sheet 01 includes the following structure: a current collector 022; a safety coating 023, which is provided on at least one surface of the current collector 022; and a positive electrode active material layer 011, which is provided on one side surface of the safety coating 023 facing away from the current collector 022.

Internal short circuits in lithium-ion batteries can generally be categorized into several types: 1) a short circuit between the positive electrode current collector and the negative electrode current collector; 2) a short circuit between the positive electrode active material and the negative electrode active material; 3) a short circuit between the negative electrode active material and the positive electrode current collector; and 4) a short circuit between the positive electrode active material and the negative electrode current collector. Among these, the short circuit point between the negative electrode active material and the positive electrode current collector has low impedance, and the triggering temperature for the exothermic reaction of the negative electrode is low, therefore, the short circuit between the negative electrode active material and the aluminum foil is the most hazardous. In the present disclosure, by introducing a safety coating with high bonding strength to the surface of the positive electrode current collector, the possibility of contact between the positive electrode current collector and the negative electrode active material is reduced, which effectively enhances the safety performance of the battery cell.

In some embodiments of the present disclosure, the single-sided coating areal density of the safety coating is 3 mg/1540.25 mm² to 18 mg/1540.25 mm². For example, it can be 3-6 mg/1540.25 mm², 6-9 mg/1540.25 mm², 9-12 mg/1540.25 mm², 12-15 mg/1540.25 mm², and 15-18 mg/1540.25 mm². When the single-sided coating areal density is below 3 mg/1540.25 mm², although it does not affect the NP value of the system, processing becomes difficult, and the safety coating is too thin, adversely affecting the mechanical safety performance of the battery cell. Conversely, when the single-sided coating areal density exceeds 18 mg/1540.25 mm², there is no further improvement in the safety performance of the battery cell (the pass rate for a nail penetration test has already reached 100% at a value below 18 mg/1540.25 mm²), and it may negatively affect the energy density of the battery cell. Based on these considerations, the single-sided coating areal density of the safety coating in the present disclosure is in a range of 3 mg/1540.25 mm² to 18 mg/1540.25 mm².

In some embodiments of the present disclosure, the safety coating is coated on both side surfaces of the current collector. The safety coating satisfies at least one of:
C1) the safety coating has a double-sided thickness of 1 µm to 20 µm;
C2) the safety coating has a double-sided film resistance tested at a pressure of 0.4 t of 0.5 Ω to 5 Ω;
C3) the safety coating has a relationship between the double-sided thickness "d" and the double-sided film resistance "R" at a pressure of 0.4 t satisfying: 2 ≤ R × d ≤ 50; and
C4) along a direction perpendicular to an unwinding direction of the positive electrode current collector, a distance W_{A1} between a left edge of the safety coating on Side A of the positive electrode current collector and a left edge of the positive electrode current collector ranges from 2 mm to 30 mm, and a distance W_{A2} between a right edge of the safety coating on Side A of the positive electrode current collector and a right edge of the positive electrode current collector ranges from 2 mm to 30 mm; a distance W_{B1} between a left edge of the safety coating on Side B of the positive electrode current collector and a left edge of the current collector ranges from 3 mm to 30 mm, and a distance W_{B2} between a right edge of the safety coating on Side A of the positive electrode current collector and a right edge of the positive electrode current collector ranges from 3 mm to 30 mm; and W_{B1} - W_{A1} ≥ 1 mm, W_{B2} - W_{A2} ≥ 1 mm.

In some embodiments of the present disclosure, the double-sided thickness "d" of the safety coating (i.e., the sum of the thickness of the safety coating coated on both side surfaces of the current collector) is 1 µm to 20 µm, such as 1 µm to 7 µm, 7 µm to 14 µm, or 14 µm to 20 µm.

In some embodiments of the present disclosure, the double-sided film resistance "R" of the safety coating (i.e., the sum of the film resistances of the safety coating on both sides of the current collector) at a pressure of 0.4 t is 0.5 Ω to 5 Ω, such as 0.5 Ω to 2 Ω, 2 Ω to 3.5 Ω, or 3.5 Ω to 5 Ω. The film resistance of the safety coating is a primary factor affecting the safety performance of the battery cell; if the film resistance is too low, the safety performance of the battery cell will be deteriorative, and if the film resistance is too high, the cycling performance of the battery cell will be deteriorative. The film resistance in a range of 0.5 Ω to 5 Ω @ 0.4 t can balance safety performance and cycling performance.

In some embodiments of the present disclosure, the relationship between the double-sided thickness "d" (in µm) of the safety coating and the double-sided film resistance "R" (in Ω) at a pressure of 0.4 t satisfies: 2 ≤ R X d ≤ 50. Generally, both parameters "R" and "d" have a positive correlation with the safety of the battery cell and a negative correlation with the cycling performance of the battery cell. When the relationship 2 ≤ R×d ≤ 50 is satisfied, a good balance between the safety performance and electrochemical performance of the battery cell can be achieved.

In some embodiments of the present disclosure, a bonding strength between the safety coating and the current collector is not less than 100 N/m. If the bonding strength is below 100 N/m, there is a risk of the safety coating peeling off during subsequent use.

In some embodiments of the present disclosure, the positive electrode active material layer has a raw material including a positive electrode active material, a second conductive agent, and a second binder.

In some embodiments of the present disclosure, the positive electrode active material accounts for 90% to 98% by mass of the positive electrode active material layer.

The positive electrode active material is not limited and can be one or more of the commonly used lithium cobalt oxide, lithium iron phosphate, or a ternary material, with a content of 90 wt% to 98 wt% of a total weight of the active material layer. The higher the content of the active material, while ensuring that the active material possesses certain conductivity and bonding strength, the higher energy density of the battery cell.

In some embodiments of the present disclosure, the second conductive agent accounts for 0.5% to 5% by mass of the positive electrode active material layer, preferably 0.5% to 2%. If the content of the second conductive agent is too low, the cycling performance of the battery cell will be poor; if too high, it is beneficial for improving cycling performance, but will lead to poor safety performance of the battery cell.

In some embodiments of the present disclosure, the second conductive agent includes at least one of acetylene black, graphene, graphdiyne, carbon nanotubes, carbon fibers, or conductive carbon black. There are no special requirements for the second conductive agent in the present disclosure, and conventional conductive agents in the art are suitable, such as conductive carbon black or carbon nanotubes, more specifically, Timcal SUPER P Li conductive carbon black.

In some embodiments of the present disclosure, the second binder accounts for 0.5% to 5% by mass of the active material layer. If the amount of the second binder is too low, the bonding strength of the active material layer will be insufficient, leading to potential peeling off during subsequent use; if the amount is too high, it will lead to the complicated processing of the active material layer and the deterioration of internal resistance of the battery cell.

In some embodiments of the present disclosure, the second binder includes at least one of polyvinylidene fluoride (PVDF), sodium carboxymethyl cellulose (CMC), styrene-butadiene rubber (SBR), or a PAA-based binders. There are no special requirements for the second binder in the present disclosure, and conventional binders in the art are suitable.

The second binder is not limited and can be common negative electrode binders, including polyvinylidene fluoride (PVDF), sodium carboxymethyl cellulose (CMC), and PAA-type binders, with a content of 0.5 wt% to 5 wt% of the total weight of the active material layer. If the amount of the second binder is too low, the bonding strength of the active material layer will be insufficient, leading to potential peeling off during subsequent use; if the amount is too high, it will lead to the complicated processing of the active material layer and the deterioration of internal resistance of the battery cell. Considering that the second binder does not directly contact the current collector, the upper limit of its amount can be appropriately reduced to ensure that there is no peeling of the positive electrode active material during the use of the battery cell. Meanwhile, a lower amount can also improve the cycling performance of the battery cell, increase the amount of positive electrode active material, and enhance the energy density of the battery cell.

In some embodiments of the present disclosure, the positive electrode sheet further includes a positive electrode current collector. The positive electrode current collector is not limited and can be a common positive electrode current collector, such as an aluminum foil or a composite aluminum foil.

In some embodiments of the present disclosure, the positive electrode current collector has a dyne value of no less than 30 dyn/cm, preferably no less than 38 dyn/cm. When the dyne value of the current collector is below 30 dyn/cm, it is unfavorable for the safety coating slurry to wet the current collector, leading to primer coating skips, and it can also reduce the bonding strength between the safety coating and the current collector, making the safety coating prone to peeling off during subsequent use, which adversely affects the safety of the battery cell. When the dyne value of the current collector is not less than 38 dyn/cm, it ensures that the base coating has a good appearance and that the bonding strength between the safety coating and the current collector is satisfactory.

In some embodiments of the present disclosure, the negative electrode active material layer has a raw material including a negative electrode active material, a third conductive agent, and a third binder.

In some embodiments of the present disclosure, the negative electrode active material accounts for 90% to 98% by mass of the negative electrode active material layer.

The negative electrode active material is not limited and can be one or more of the commonly used materials such as artificial graphite, natural graphite, modified graphite, a silicon oxide, and a silicon-carbon composite, with a content of 90 wt% to 98 wt% of the total weight of the negative electrode active material layer.

In some embodiments of the present disclosure, the third conductive agent accounts for 0.5% to 5% by mass of the negative electrode active material layer, preferably 0.5% to 2%. If the content of the third conductive agent is too low, the cycling performance of the battery cell will be poor; if too high, it is beneficial for improving cycling performance, but may lead to poor safety performance of the battery cell.

In some embodiments of the present disclosure, the third conductive agent includes at least one of acetylene black, graphene, graphdiyne, carbon nanotubes, carbon fibers, and conductive carbon black. There are no special requirements for the third conductive agent in the present disclosure, and conventional conductive agents in the art are suitable, such as conductive carbon black or carbon nanotubes, more specifically, Timcal SUPER P Li conductive carbon black.

In some embodiments of the present disclosure, the third binder accounts for 0.5% to 5% by mass of the negative electrode active material layer. If the amount of the third binder is too low, the bonding strength of the active material layer will be insufficient, leading to potential peeling off during subsequent use; if the amount is too high, it will lead to the complicated processing of the active material layer and the deterioration of internal resistance of the battery cell.

In some embodiments of the present disclosure, the third binder includes at least one of polyvinylidene fluoride (PVDF), sodium carboxymethyl cellulose (CMC), styrene-butadiene rubber (SBR), and PAA-type binders. There are no special requirements for the third binder in the present disclosure, and conventional binders in the art are suitable.

In some embodiments of the present disclosure, the negative electrode sheet further includes a negative electrode current collector. The negative electrode current collector is not limited and can be common negative electrode current collectors such as a copper foil or a composite copper foil.

In some embodiments of the present disclosure, the negative electrode current collector has a dyne value of no less than 30 dyn/cm, and preferably no less than 38 dyn/cm. When the dyne value of the current collector is below 30 dyn/cm, it is unfavorable for the safety coating slurry to wet the current collector, leading to primer coating skips. Furthermore, it can reduce the bonding strength between the safety coating and the current collector, making the safety coating prone to peeling off during subsequent use, and adversely affecting the safety of the battery cell. When the dyne value of the current collector is not less than 38 dyn/cm, it ensures that the base coating has a good appearance and that the bonding strength between the safety coating and the current collector is satisfactory.

In some embodiments of the present disclosure, the battery cell further includes a separator arranged between the positive electrode sheet and the negative electrode sheet.

According to a second aspect of the present disclosure, a method for preparing the battery cell described above is provided, which includes the following steps:
S100: mixing raw materials for preparing the safety coating in a solvent evenly to obtain a safety coating slurry;
S200: coating the safety coating slurry on at least one side surface of a positive electrode current collector to obtain a positive electrode current collector comprising a safety coating;
S300: coating a positive electrode active material layer on one side surface of the safety coating facing away from the positive electrode current collector or on one side surface of the positive electrode current collector facing away from the safety coating to obtain a positive electrode sheet;
S400: coating a negative electrode active material layer on a negative electrode current collector to obtain a negative electrode sheet; and
S500: assembling the positive electrode sheet and the negative electrode sheet to obtain the battery cell.

The method for preparing the battery cell according to the embodiments of the present disclosure has at least the following beneficial effects: by introducing a safety coating into the positive electrode sheet and limiting the capacity contributed by the active material in the safety coating, the battery cell provided by the present disclosure allows to balance the mechanical safety performance, thermal chamber performance and cycling performance of the battery cell, and enhance low-temperature discharge performance and rate discharge performance, without changing the existing processes. The method is not only simple in process, but also has mild reaction conditions and is compatible with the existing preparation process, showing potential for large-scale applications.

In some embodiments of the present disclosure, the safety coating includes at least one of the following:
D1) the safety coating slurry has a solid content of ≥10%;
D2) the safety coating slurry has a viscosity of ≥50 mPa·s;
D3) the positive electrode current collector has a dyne value of ≥30 dyn/cm;
D4) the safety coating slurry is coated onto one side surface or both side surfaces of the positive electrode current collector using gravure printing; and
D5) when D4) is included, a temperature of an oven during gravure printing is 90 °C to 110 °C, and a printing speed is 10 m/min to50 m/min.

In some embodiments of the present disclosure, the raw materials for the safety coating include a first conductive agent, a first binder, an inorganic filler, a first active material, a dispersant, and a co-solvent.

In some embodiments of the present disclosure, a mass ratio of the first conductive agent, the first binder, the inorganic filler, the first active material, the dispersant, and the co-solvent is 0.5-5: 1-21.2: 1-50: 1-95: 0.01-1:(1-20. For example, in parts by weight, the first conductive agent can be 0.5-5 parts, preferably 1.5-3 parts; the first binder can be 1-21.2 parts, preferably 5-15 parts; the inorganic filler can be 1-50 parts; the first active material can be 1-95 parts; the dispersant can be 0.01-1 part; and the co-solvent can be 1-20 parts.

In some embodiments of the present disclosure, the co-solvent includes one or more of isopropanol (IPA), ethanol, ethylene glycol, acetone, and ethyl acetate. The co-solvent can optimize the performance of the slurry, and may be one or more of isopropanol (IPA), ethanol, ethylene glycol, acetone, and ethyl acetate. The co-solvent can reduce a viscosity of the slurry, improve a wettability of the slurry to the current collector, and ensure that the slurry can uniformly cover the surface of the current collector to form a more uniform and dense safety coating, thereby improving the coating quality. Additionally, during the production process of the safety coating, an evaporation rate of the co-solvent is usually faster than that of the main solvent, which helps to quickly form a uniform coating and reduce primer coating skips. Preferably, the co-solvent is isopropanol (IPA), which is a commonly used co-solvent with good solubility and volatility, and can effectively improve the performance of the slurry.

In some embodiments of the present disclosure, the safety coating slurry has a solid content of ≥10%, preferably between 10% and 21%.

In some embodiments of the present disclosure, the safety coating slurry has a viscosity of ≥50 mPa·s.

The solid content of the safety coating slurry should not be lower than 10%, and the viscosity should not be lower than 50 mPa·s. If the solid content is too low, it not only reduces production efficiency but also makes it difficult to obtain a water-based safety coating with a specified thickness and coating areal density. Additionally, if the viscosity is too low, it is unfavorable for the gravure printing process.

In some embodiments of the present disclosure, the positive electrode current collector and/or negative electrode current collector have/has a dyne value of ≥30 dyn/cm, preferably ≥38 dyn/cm. When the dyne value of the current collector is below 30 dyn/cm, it is unfavorable for the safety coating slurry to wet the current collector, leading to primer coating skips. Furthermore, it will reduce the bonding strength between the safety coating and the current collector, making the safety coating prone to peeling off during subsequent use, and negatively affecting the safety of the battery cell. The current collector having a dyne value not less than 38 dyn/cm ensures that the base coating has a good appearance and that the bonding strength between the safety coating and the current collector is satisfactory.

In some embodiments of the present disclosure, the safety coating slurry is coated on one side surface or both side surfaces of the positive electrode current collector using gravure printing.

In some embodiments of the present disclosure, the temperature of the oven during gravure printing is between 90 °C and 110 °C; the printing speed is not less than 10 m/min, preferably between 10 m/min and 50 m/min.

The temperature of the oven during gravure printing should be between 90 °C and 110 °C, and the printing speed should be between 10 m/min and 50 m/min. If the temperature is below 90°C, the production efficiency will be decreased; if it exceeds 110°C, issues such as cracking and migration of the conductive agent to the surface may occur. If the printing speed is too low, the production efficiency will also be decreased, while a speed that is too high may lead to coating skips of the safety layer, adversely affecting the safety performance of the battery cell.

In some embodiments of the present disclosure, a method for preparing a positive electrode sheet includes the following steps:
(10) mixing a first binder with a solvent, and performing dissolving and mixing to obtain a binder solution;
(20) mixing the binder solution, a first conductive agent, an inorganic filler, a first active material, a dispersant, and a co-solvent uniformly to obtain a safety coating slurry; and
(30) transferring the safety coating slurry obtained in step (20) to one side surface or both side surfaces of a current collector using gravure printing to obtain a positive electrode sheet with a safety coating area and a non-safety coating area arranged at intervals along an unwinding direction of the current collector.

Wherein, the non-safety coating area corresponds to a head and/or a tail of the positive electrode sheet of the battery cell, where one side is typically the active material, while the other side is eithe a bare foil or a separately arranged ceramic layer. The ceramic layer generally contains merely theinorganic filler and binder, which can reduce the generation of burrs on the positive electrode current collector in the non-safety coating area during testing of battery cell, thereby lowering the probability of contact between the positive electrode current collector and the negative electrode active material and improving the safety performance of the battery cell. However, it requires an additional coating step to coat the ceramic layer after the safety coating is formed, which not only reduces production efficiency but also increases production costs.

In some embodiments of the present disclosure, the first binder is a polyacrylate-based binder.

In some embodiments of the present disclosure, the binder solution has a solid content of 10% to 30%, for example, 10% to 20%, 20% to 25%, or 25% to 30%.

In some embodiments of the present disclosure, the binder solution has a viscosity of 1×10³ mPa·s to 3×10⁴ mPa·s, preferably 1.5×10⁴ mPa·s to 2.5×10⁴ mPa·s, more preferably 1.6×10⁴ mPa·s to 2.2×10⁴ mPa·s, for example, it can be 2×10⁴ mPa·s.

If the solid content and viscosity of the binder solution obtained by performing dissolving and mixing on the binder are too low, it will not only reduce processing efficiency but may also lead to insufficient bonding strength of the safety coating; conversely, if the solid content and viscosity are too high, it may result in difficulties in processing the safety coating.

In some embodiments of the present disclosure, the positive electrode current collector comprising the safety coating has a total length of "L", the safety coating area has a length of "L₁", and the non-safety coating area has a length of "L₂", where L₁ > L₂ and L₁ + L₂ = L.

In some embodiments of the present disclosure, the safety coating can be coated on both sides (Side A and Side B) of the positive electrode current collector, wherein the safety coating area on Side A has a length of L_{A1}, the non-safety coating area has a length of L_{A2}, where L_{A1} > L_{A2}, and L_{A1} + L_{A2} = L_{A}; similarly, the safety coating area on Side B has a length of L_{B1}, and the non-safety coating area has a length of L_{B2}, where L_{B1} > L_{B2}, and L_{B1} + L_{B2} = L_{B}.

In some preferred embodiments of the present disclosure, to improve production efficiency and reduce costs, a ceramic layer can be arranged only in the non-safety coating area on Side B, while the non-safety coating area on Side A can also be arranged with a safety coating, thus creating a single-sided continuous coating structure, where L_{A2} = 0, that is L_{B1} + L_{B2} = L_{B} = L_{A1} = L_{A} = L.

Fig. 2 illustrates a cross-sectional view of a current collector with a safety coating along the unwinding direction in one specific example of the present disclosure. In Fig. 2, 02 is a positive electrode current collector with a safety coating; 021 is a reserved slot; 022 is a current collector; 023 is a safety coating; and 024 is a non-safety coating area. The safety coating areas and non-safety coating areas on Side A and Side B of the positive electrode sheet can be arranged oppositely, as shown in Panel (a) of Fig.2; or the non-safety coating area is arranged on one side, while the safety coating area is arranged on the other side, as shown in Panel (b) of Fig.2. The current collector with a safety coating has a total length of L, the safety coating area on Side B has a length of L_{B1}, the non-safety coating area on Side B has a length of L_{B2}, where L_{B1} > L_{B2}, and L_{B1} + L_{B2} = L_{B} = L_{A1} = L_{A} = L; alternatively, the safety coating can also be arranged on the non-safety coating area, that is, both L_{A2} and L_{B2} are 0, and L_{A1} = L_{B1} = L_{A} = L_{B}, as illustrated in Panel (c) of Fig.2.

In some embodiments of the present disclosure, when coating the safety coating, it is also necessary to reserve N₁ slots for tab welding in the safety coating area or the non-safety coating area along the unwinding direction of the current collector, where N₁ ≥ 0.

In some embodiments of the present disclosure, when coating the safety coating, it is also necessary to reserve N₂ slots for tab welding in the safety coating area or the non-safety coating area along the direction perpendicular to the unwinding direction of the current collector, where N₂ ≥ 0.

In some embodiments of the present disclosure, when coating the safety coating, it is also possible to simultaneously coat N₃ lines of safety coatings along the unwinding direction of the current collector, where N₃ ≥ 1.

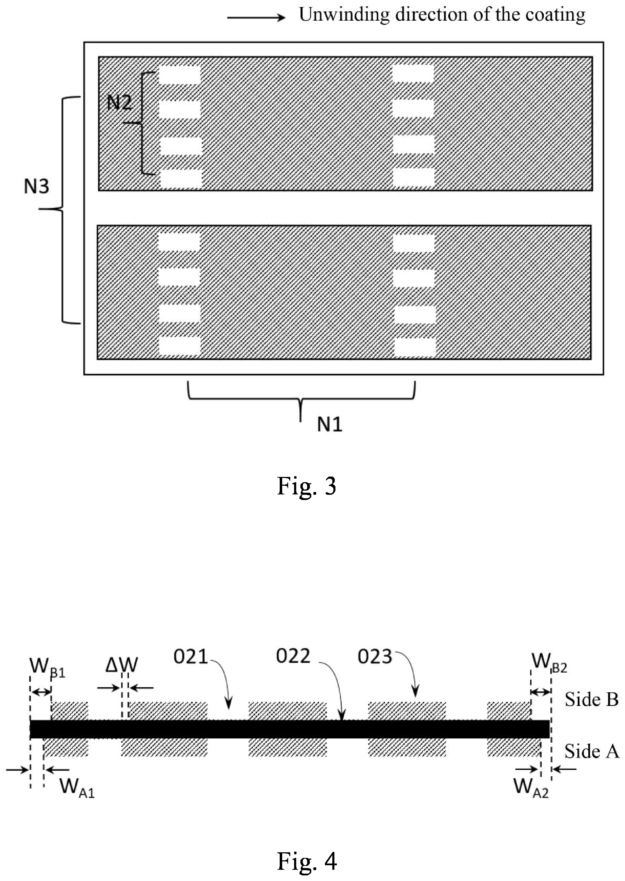

In the present disclosure, when coating the safety coating, slots for tab welding can be reserved or not reserved as needed, as shown in Fig. 3.

In some embodiments of the present disclosure, if both sides of the current collector are coated with safety coatings, the reserved slots for tab welding should be aligned between Side A and Side B, and a misalignment distance ΔW between the lateral direction and longitudinal direction is not exceeding 2 mm.

In some embodiments of the present disclosure, the safety coating is coated on both side surfaces of the positive electrode current collector; along the direction perpendicular to the unwinding direction of the positive electrode current collector, a distance W_{A1} between a left edge of the safety coating on Side A of the positive electrode current collector and a left edge of the positive electrode current collector ranges from 2 mm to 30 mm, and a distance W_{A2} between a right edge of the safety coating on Side A of the positive electrode current collector and a right edge of the positive electrode current collector ranges from 2 mm to 30 mm; a distance W_{B1} between a left edge of the safety coating on Side B of the positive electrode current collector and the left edge of the positive electrode current collector ranges from 3 mm to 30 mm, and a distance W_{B2} between a right edge of the safety coating on Side B of the positive electrode current collector and a right edge of the positive electrode current collector ranges from 3 mm to 30 mm; and W_{B1} - W_{A1} ≥ 1 mm, W_{B2} - W_{A2} ≥ 1 mm. In other words, if both sides of the positive electrode current collector are coated with safety coatings, along the direction perpendicular to the unwinding direction of the positive current collector, the distance between the left edge of the safety coating on Side A and the left edge of the current collector is W_{A1} (i.e., the left margin on Side A is W_{A1}), the right margin on Side A is W_{A2}, the left margin on Side B is W_{B1}, and the right margin on Side B is W_{B2}, and these values satisfy 2 mm ≤ W_{A1}, W_{A2} ≤ 30 mm, 3 mm ≤ W_{B1}, W_{B2} ≤ 30 mm, and W_{B1} - W_{A1} ≥ 1 mm, W_{B2} - W_{A2} ≥ 1 mm. Fig.4 shows a cross-sectional view of a specific embodiment of the present disclosure in which the safety coating is perpendicular to the unwinding direction, wherein 021 is a reserved slot; 022 is a current collector; and 023 is a safety coating. This arrangement allows a width of the safety coating on Side A is at least 2 mm wider than that on Side B, thereby reducing edge bulging during the winding of the base coating.

According to a third aspect of the present disclosure, a lithium-ion battery is provided, which includes the battery cell described above or the battery cell obtained by the preparation method described above.

Since the lithium-ion battery comprises the battery cell described in all the technical solutions of the above embodiments, it possesses all the beneficial effects brought about by the technical solutions of the above embodiments. Specifically, the mechanical safety performance, thermal performance, and cycling performance of the battery cell in the lithium-ion battery can be balanced, and the low-temperature discharge performance and rate discharge performance can be improved without changing the existing process, by introducing a safety coating in the electrode sheet and limiting the capacity contributed by the first active material in the safety coating.

In some embodiments of the present disclosure, the battery cell includes a positive electrode sheet, a negative electrode sheet, and a separator arranged between the positive electrode sheet and the negative electrode sheet.

In some embodiments of the present disclosure, the positive electrode sheet is the electrode sheet described above. The positive electrode sheet includes the positive electrode current collector comprising a safety coating and a positive electrode active material layer coated on at least one surface of the positive electrode current collector. The positive electrode current collector is a commonly used positive electrode current collector in the art, such as an aluminum foil, but is not limited to this. The positive electrode active material layer includes a positive electrode active material, which is a commonly used positive electrode active material in lithium-ion batteries, including but not limited to one or a combination of more of compounds represented by a chemical formula LiₓNiₕCo_{y}M_{z}O_{2-d}N_{d} (where 0.95 ≤ x ≤ 1.2, h > 0, y ≥ 0, z ≥ 0, and h + y + z = 1, 0 ≤ d ≤ 1, M is one or a combination of more of Mn, and Al, and N is one or a combination of more of F, P, and S). The positive electrode active material can also include, but are not limited to, one or a combination of more of LiCoO₂, LiNiO₂, LiVO₂, LiCrO₂, LiMn₂O₄, LiCoMnO₄, Li₂NiMn₃O₈, LiNi_{0.5}Mn_{1.5}O₄, LiCoPO₄, LiMnPO₄, LiFePO₄, LiNiPO₄, LiCoFSO₄, CuS₂, FeS₂, MoS₂, NiS, TiS₂, etc. The positive electrode active material may also undergo modification treatment, and the methods for modifying the positive electrode active material should be known to those skilled in the art, such as coating, doping, etc. A materials used for modification can include but are not limited to one or a combination of more of Al, B, P, Zr, Si, Ti, Ge, Sn, Mg, Ce, W, etc.

In some embodiments of the present disclosure, the negative electrode sheet is the electrode sheet described above. The negative electrode sheet includes the negative electrode current collector comprising a safety coating and a negative electrode active material layer coated on at least one surface of the negative electrode current collector. The negative electrode current collector has no specific requirements and can be a commonly used copper foil in the art. The negative electrode active material layer includes a negative electrode active material, which includes a silicon-based material, selected from one or more of an elemental silicon, a silicon oxide, a silicon-carbon composite, and a silicon alloy, or a mixture of a silicon negative electrode material and other commonly used negative electrode active materials. The other negative electrode active materials include but are not limited to one or more of graphite, soft carbon, hard carbon, carbon fibers, mesophase carbon microspheres, tin-based materials, lithium titanate, or other metals that can form alloys with lithium. The graphite can be one or more of artificial graphite, natural graphite, and modified graphite; the tin-based material can be one or more of an elemental tin, a tin oxide, and a tin alloy.

In some embodiments of the present disclosure, the separator can be made from various materials suitable for lithium-ion battery separator in the art, such as but not limited to one or a combination of more of polyethylene, polypropylene, polyvinylidene fluoride, aramid, polyethylene terephthalate, polytetrafluoroethylene, polyacrylonitrile, polyimide, polyamide, polyester, and natural fibers. In actual production, there are no strict limitations on the material and structure of the separator. For example, the separator can be a multilayer structure formed by stacking the above materials, a single-layer structure formed by mixing the above materials, or a single-layer structure formed by a single material, as long as it fulfill the basic function of a separator.

In some embodiments of the present disclosure, the lithium-ion battery further includes an electrolytic solution that impregnates the positive electrode, negative electrode, and separator. The electrolytic solution comprises an organic solvent, a lithium salt electrolyte, and an additive. The lithium salt electrolyte may be LiPF₆ and/or LiBOB used in a high-temperature electrolytic solution; at least one of LiBF₄, LiBOB, and LiPF₆ used in a low-temperature electrolytic solution; at least one of LiBF₄, LiBOB, LiPF₆, and LiTFSI used in an overcharge-resistant electrolytic solution; or at least one of LiClO₄, LiAsF₆, LiCF₃SO₃, and LiN(CF₃SO₂)₂. The organic solvent may be a cyclic carbonate, including propylene carbonate (PC) and ethylene carbonate (EC); a linear carbonate, including diethyl carbonate (DEC), dimethyl carbonate (DMC), or ethyl methyl carbonate (EMC); or a carboxylate ester, including propylene propyrate (PP), methyl acrylate (MA), ethyl acetate (EA), ethyl propionate (EP), etc. The additive includes, but is not limited to at least one of a film-forming additive, a conductive additive, a flame-retardant additive, an overcharge-resistant additive, an additive for controlling the content of H₂O and HF in the electrolytic solution, an additive for improving low-temperature performance, and a water-based safety additive.

The present disclosure further provides a secondary battery, which includes the battery cell described above or the battery cell obtained by the preparation method described above. The battery cell provided in the present disclosure can be applied not only to the aforementioned lithium-ion batteries but also to other secondary batteries, including sodium-ion batteries, potassium-ion batteries, etc., without any restrictions herein.

According to a fourth aspect of the present disclosure, use of the aforementioned lithium-ion battery in an energy storage device, a power-consuming device, or an electronic device is provided.

### BRIEF DESCRIPTION OF DRAWINGS

The present disclosure will be further described with reference to the accompanying drawings and examples, in which:
Fig.1 is a schematic structural diagram of a positive electrode sheet comprising a safety coating provided by the present disclosure, wherein 01 is a positive electrode sheet; 011 is a positive electrode active material layer; 022 is a current collector; 023 is a safety coating.
Fig.2 is a schematic cross-sectional structure diagram of a current collector comprising a safety coating along the unwinding direction provided by the present disclosure, wherein 02 is a positive electrode current collector comprising a safety coating; 021 is a reserved slot; 022 is a current collector; 023 is a safety coating; 024 is a non-safety coating area.
Fig.3 is a top view of a current collector comprising a safety coating in an uncut state provided by the present disclosure.
Fig.4 is a schematic cross-sectional structure diagram of a current collector comprising a safety coating along the unwinding direction provided by the present disclosure, wherein 021 is a reserved slot; 022 is a current collector; 023 is a safety coating.

### DETAILED DESCRIPTION

The concept and technical effects of the present disclosure will be described clearly and completely below with reference to examples, so as to fully understand the purpose, characteristics and technical effects of the present disclosure. Obviously, the described examples are only a part of the examples of the present disclosure, but not all the examples. Based on the examples of the present disclosure, other examples obtained by those skilled in the art without creative work belong to the protection scope of the present disclosure.

In the description of the present disclosure, the terms "an embodiment" "some embodiments", "illustrative embodiment", "example", "specific example", or "some examples", etc., refer that the specific features, structures, materials, or characteristics described in conjunction with that embodiment or example are included in at least one embodiment or example of the present disclosure. In the description, the illustrative expressions of the aforementioned terms do not necessarily refer to the same embodiment or example. Moreover, the specific features, structures, materials, or characteristics described can be appropriately combined in any one or more embodiments or examples.

In the description of the present disclosure, unless otherwise specified, the numerical range "a-b" represents an abbreviation representation of any real numbers between a and b, where both a and b are real numbers. Unless otherwise specified, various reaction or operation steps may be carried out in sequence or not in sequence. Preferably, the reaction methods in the present disclosure are carried out in sequence.

For the following examples where specific techniques or conditions are not specified, they are conducted according to the techniques or conditions described in the literature in the art or according to product specifications. All reagents or instruments not specified the manufacturer are conventional products available.

### Example 1

This example provided a lithium-ion battery, which comprised a positive electrode sheet comprising a safety coating, wherein the safety coating comprised a first active material lithium iron phosphate (LFP), a first binder, a first conductive agent Super P Li, and an inorganic filler boehmite.

Wherein the first binder had a structural formula of: 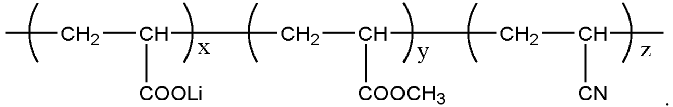
(1) Preparation of the first binder:
   a) Calculated in parts by weight, 1000 parts of distilled water was added into a reaction vessel, stirring was started, and high-purity nitrogen was introduced for removing oxygen for 1 hour. Then, 50 parts of acrylonitrile, 35 parts of lithium acrylate, and 15 parts of methyl acrylate were added, and a resulting mixture was heated to 65 °C under an inert atmosphere and maintained at that temperature.
   b) Calculated in parts by weight, 5 parts of an ammonium persulfate solution with a mass concentration of 20% was added as an initiator to initiate a reaction, and the reaction lasted for 5 hours.
   c) After the reaction was completed, a resulting product was subjected to filtering, drying, crushing, and sieving to obtain the binder. The binder had a -CN group content n₁ of 50%, a -COOLi group content n₂ of 35%, a -COOCH₃ group content n₃ of 15%, a weight-average molecular weight M_{w} of 3.5×10⁵, a number-average molecular weight Mₙ of 1.8×10⁵ and a M_{w}/Mₙ ratio of 1.94, an electrolytic solution absorption rate c of 23%.
(2) Preparation of a positive electrode current collector comprising the safety coating:
   Deionized water was used as a solvent, calculated in parts by weight, 10 parts of the above binder were added, dissolving and mixing were performed, and the amount of deionized water was adjusted until a binder solution with a solid content of 15% and a viscosity of 10⁴ mPa·s was obtained. Then, calculated in parts by weight, 58 parts of the first active material lithium iron phosphate (with a median particle size Dᵥ₅₀ of 0.9 µm and a specific surface area of 10.9 m²/g), 30 parts of the inorganic filler boehmite (with a median particle size Dᵥ₅₀ of 0.4 µm and a specific surface area of 9.5 m²/g), 1.8 parts of the first conductive agent Super P Li, 0.2 parts of a dispersant polyvinyl pyrrolidone (PVP), and a co-solvent isopropanol (IPA) accounted for 10% of the total weight of the slurry were mixed evenly to obtain a safety coating slurry with a solid content of 28% and a viscosity of 50-400 mPa·s. The safety coating slurry was coated on both side surfaces of an aluminum foil using gravure printing, during coating, L_{A2} was set to 0, i.e., L_{A1} = L_{A} = L, N₁ - N₃ = 1, and N₂ = 4. The single-sided coating areal density of the safety coating was 9 mg/1540.25 mm². Additionally, a temperature of the oven during printing was 95 °C, and a printing speed was 30 m/min. Finally, a base coating with a double-sided coating areal density of 18 mg/1540.25 mm², a double-sided thickness of 10 µm, a double-sided film resistance of 1.1 Ω @ 0.4 T, and a bonding strength between the safety coating and the current collector of 225 N/m was obtained. The capacity C₁ contributed by lithium iron phosphate in the safety coating per square meter was calculated as C₁ = k×c_{w} ×a, where k = 0.306, a = 170, and c_{w} = 9 mg/1540.25 mm², resulting in C₁ = 468 mAh.
(3) Preparation of the positive electrode sheet:
   The positive electrode active material lithium cobalt oxide, a second conductive agent (a mixture of conductive carbon black and carbon nanotubes in a mass ratio of 6:5), a PVDF binder, and N-Methylpyrrolidone (NMP) were mixed in a mass ratio of 97.6: 1.1: 1.3: 35 to form a positive electrode slurry with a solid content of 75% and a viscosity of 7000 mPa·s. The positive electrode slurry was coated on one side of the aluminum foil current collector comprising the safety coating with a coating areal density of 214 mg/1540.25 mm², dried at 85 °C and winded. Then, the positive electrode slurry was coated on the other side of the aluminum foil current collector comprising the safety coating and dried using the same method above, followed by cold pressing. Edge trimming and cutting were then performed to obtain the lithium-ion battery positive electrode sheet. The capacity C₂ contributed by lithium cobalt oxide in the positive electrode sheet per square meter was 24409 mAh.
(4) Preparation of the negative electrode sheet:
   Water was used as the solvent, and graphite, a thickening agent, and a SBR binder were mixed evenly in a mass ratio of 97.7: 1.1: 1.2 to form a negative electrode slurry for lithium-ion battery with a solid content of 50% and a viscosity of 5000 mPa·s. The slurry was coated on one side surface of a copper foil current collector with a coating areal density of 115 mg/1540.25 mm², dried at 80 °C and winded. Then, the negative electrode slurry was coated on the other side of the copper foil and dried using the same method above, obtaining a negative electrode sheet coated with an active material on both sides. The capacity C₀ contributed by graphite in the negative electrode sheet per square meter was 25750 mAh.
(5) Preparation of an electrolytic solution:
   Lithium hexafluorophosphate (LiPF₆) was dissolved in a mixed solvent of dimethyl carbonate (DMC), ethylene carbonate (EC), and ethyl methyl carbonate (EMC) with a mass ratio of DMC, EC, and EMC being 3: 5: 2 to obtain the electrolytic solution.
(6) Assembly of the battery:
   The prepared positive electrode sheet, negative electrode sheet, and a separator were wound together to form a battery cell with a capacity of approximately 5 Ah. The separator was arranged between the adjacent positive electrode sheet and negative electrode sheet, the positive electrode was connected by spot-welding an aluminum tab and the negative electrode was connected by spot-welding a nickel tab. The battery cell was then placed in an aluminum-plastic pouch, baked, and introduced with the above electrolytic solution. After sealing, formation, and capacity grading processes, the lithium-ion battery was finally obtained.

### Example 2

The differences between Example 1 and Example 2 were that: in Example 2, during the preparation of the positive electrode sheet, the coating areal density of the positive electrode slurry was 218 mg/1540.25 mm², and the capacity C₂ contributed by lithium cobalt oxide in the positive electrode sheet per square meter was 24865 mAh.

The rest steps and conditions were the same as those in Example 1 and, were not repeated here.

### Example 3

The differences between Example 1 and Example 3 were that: in Example 3, during the preparation of the positive electrode sheet, the coating areal density of the positive electrode slurry was 208.5 mg/1540.25 mm², and the capacity C₂ contributed by lithium cobalt oxide in the positive electrode sheet per square meter was 23781 mAh.

The rest steps and conditions were the same as those in Example 1, and were not repeated here.

### Example 4

The differences between Example 1 and Example 4 were that: in Example 4, during the preparation of the positive electrode sheet, the single-sided coating areal density c_{w} of the safety coating was 18 mg/1540.25 mm², and the capacity C₁ contributed by lithium iron phosphate in the safety coating per square meter was 936 mAh; the coating areal density of the positive electrode slurry was 200 mg/1540.25 mm², and the capacity C₂ contributed by lithium cobalt oxide in the positive electrode sheet per square meter was 22812 mAh.

The rest steps and conditions were the same as those in Example 1, and were not repeated here.

### Example 5

The differences between Example 1 and Example 5 were that: in Example 5, during the preparation of the positive electrode sheet, the single-sided coating areal density c_{w} of the safety coating was 3 mg/1540.25 mm², and the capacity C₁ contributed by lithium iron phosphate in the safety coating per square meter was 156 mAh.

The rest steps and conditions were the same as those in Example 1, and were not repeated here.

### Example 6

The differences between Example 1 and Example 6 were that: in Example 6, during the preparation of the positive electrode sheet, the single-sided coating areal density c_{w} of the safety coating was 6 mg/1540.25 mm², and the capacity C₁ contributed by lithium iron phosphate in the safety coating per square meter was 312 mAh.

The rest steps and conditions were the same as those in Example 1, and were not repeated here.

### Example 7

The differences between Example 1 and Example 7 were that: in Example 7, during the preparation of the positive electrode sheet, the single-sided coating areal density c_{w} of the safety coating was 12 mg/1540.25 mm², and the capacity C₁ contributed by lithium iron phosphate in the safety coating per square meter was 624 mAh.

The rest steps and conditions were the same as those in Example 1, and were not repeated here.

### Example 8

The differences between Example 1 and Example 8 were that: in Example 8, during the preparation of the positive electrode sheet, the single-sided coating areal density c_{w} of the safety coating was 18 mg/1540.25 mm², and the capacity C₁ contributed by lithium iron phosphate in the safety coating per square meter was 936 mAh.

The rest steps and conditions were the same as those in Example 1, and were not repeated here.

### Example 9

The differences between Example 1 and Example 9 were that: in Example 9, the first active material was changed from lithium iron phosphate (LFP) to lithium manganese iron phosphate (LMFP), with no other changes; and the capacity C₁ contributed by lithium manganese iron phosphate in the safety coating per square meter was calculated as C₁ = k×c_{w} × a, where k = 0.306, a = 170, and c_{w} = 9 mg/1540.25 mm², resulting in C₁ = 468 mAh.

The steps and conditions were the same as those in Example 1, and were not repeated here.

### Example 10

The differences between Example 1 and Example 10 were that: in Example 10, the first active material was changed from lithium iron phosphate (LFP) to lithium cobalt oxide (LCO), with no other changes; and the capacity C₁ contributed by lithium cobalt oxide in the safety coating per square meter was calculated as C₁ = k ×c_{w}× a, where k = 0.399, a = 274, and c_{w} = 9 mg/1540.25 mm², resulting in C₁ = 984 mAh.

The rest steps and conditions were the same as those in Example 1, and were not repeated here.

### Example 11

The differences between Example 1 and Example 11 were that: in Example 11, the first binder had a -CN group proportion n₁ of 55%, a -COOLi group proportion n₂ of 30%, a -COOCH₃ group proportion n₃ of 15%, a weight-average molecular weight M_{w} of 3.6×10⁵, a number-average molecular weight Mₙ of 2.1×10⁵, a ratio M_{w}/Mₙ of 1.7, and an electrolytic solution absorption rate c of 22%.

The rest steps and conditions were the same as those in Example 1, and were not repeated here.

### Example 12

The differences between Example 1 and Example 12 were that: in Example 12, the first binder had a -CN group proportion n₁ of 53%, a -COOLi group proportion n₂ of 37%, a -COOCH₃ group proportion n₃ of 10%, a weight-average molecular weight M_{w} of 3.4×10⁵, a number-average molecular weight Mₙ of 2.0×10⁵, a ratio M_{w}/Mₙ of 1.7, and an electrolytic solution absorption rate c of 17%.

The rest steps and conditions were the same as those in Example 1, and were not repeated here.

### Example 13

The differences between Example 1 and Example 13 were that: in Example 13, the first active material lithium iron phosphate (LFP) had a median particle size Dᵥ₅₀ of 2 µm.

The rest steps and conditions were the same as those in Example 1, and were not repeated here.

### Example 14

The differences between Example 1 and Example 14 were that: in Example 14, the first active material lithium iron phosphate (LFP) had a median particle size Dᵥ₅₀ of 15 µm.

The rest steps and conditions were the same as those in Example 1, and were not repeated here.

### Example 15

The differences between Example 1 and Example 15 were that: in Example 15, the first binder was replaced with a PVDF binder, and the solvent was changed from deionized water to NMP.

The rest steps and conditions were the same as those in Example 1, and were not repeated here.

### Comparative Example 1

The differences between Example 1 and Comparative Example 1 were that: in Comparative Example 1, during the preparation of the positive electrode sheet, the single-sided coating areal density c_{w} of the safety coating was 30 mg/1540.25 mm², and the capacity C₁ contributed by lithium iron phosphate in the safety coating per square meter was 1561 mAh; and the coating areal density of the positive electrode slurry was 200 mg/1540.25 mm², and the capacity C₂ contributed by lithium cobalt oxide in the positive electrode sheet per square meter was 22812 mAh.

The rest steps and conditions were the same as those in Example 1, and were not repeated here.

### Comparative Example 2

The differences between Example 1 and Comparative Example 2 were that: in Comparative Example 2, during the preparation of the positive electrode sheet, the single-sided coating areal density c_{w} of the safety coating was 2.5 mg/1540.25 mm², and the capacity C₁ contributed by lithium iron phosphate in the safety coating per square meter was 130 mAh.

The rest steps and conditions were the same as those in Example 1, and were not repeated here.

### Comparative Example 3

The differences between Example 1 and Comparative Example 3 were that: in Comparative Example 3, during the preparation of the positive electrode sheet, the single-sided coating areal density c_{w} of the safety coating was 18 mg/1540.25 mm², and the capacity C₁ contributed by lithium iron phosphate in the safety coating per square meter was 936 mAh; and the coating areal density of the positive electrode slurry was 218 mg/1540.25 mm², and the capacity C₂ contributed by lithium cobalt oxide in the positive electrode sheet per square meter was 24865 mAh.

The rest steps and conditions were the same as those in Example 1, and were not repeated here.

### Comparative Example 4

The differences between Example 1 and Comparative Example 4 were that: in Comparative Example 4, during the preparation of the positive electrode sheet, the coating areal density of the positive electrode slurry was 202.5 mg/1540.25 mm², and the capacity C₂ contributed by lithium cobalt oxide in the positive electrode sheet per square meter was 23097 mAh.

The rest steps and conditions were the same as those in Example 1, and were not repeated here.

### Comparative Example 5

The differences between Example 1 and Comparative Example 5 were that: in Comparative Example 5, during the preparation of the positive electrode sheet, the safety coating did not contain the first active material.

The rest steps and conditions were the same as those in Example 1, and were not repeated here.

### Comparative Example 6

The differences between Example 1 and Comparative Example 6 were that: in Comparative Example 6, during the preparation of the positive electrode sheet, the safety coating did not contain a dispersant.

The rest steps and conditions were the same those as in Example 1, and were not repeated here.

### Comparative Example 7

The differences between Example 1 and Comparative Example 7 were that: in Comparative Example 7, the surface of the positive electrode current collector was not coated with the safety coating.

The rest steps and conditions were the same as those in Example 1, and were not repeated here.

### Test Example

To verify the impact of the introduction of the safety coating on the performance of the battery cell, tests were conducted on the electrolytic solution absorption rate c of the first binder, as well as nail penetration, 132°C/136°C thermal chamber, low-temperature discharge performance, rate performance, and cycling performance of the battery cell.

Method for testing electrolytic solution absorption rate c: pouring a binder solution into a polytetrafluoroethylene dish and then baking to evaporate deionized water, so as to form a binder polymer film with a thickness controlled at 100 µm; cutting the film into pieces, to obtain film sheets with a length of 50 mm and a width of 50 mm; after vacuum drying the film sheets for 24 hours, weighing the dried film sheets; immersing the dried film sheets in an electrolytic solution at 80 °C for 12 hours and then taking the film sheets out of the electrolytic solution, wiping off the electrolytic solution adhering to the surfaces of film sheets, and weighing the film sheets again to obtain the weight of the film sheets after absorbing the electrolytic solution; and a percentage increase in weight (%) of the film sheets after being immersed in the electrolytic solution is the electrolytic solution absorption rate of the binder at 80°C.

Method for testing nail penetration: charging a battery cell at room temperature at a constant current of 1.0 C to 4.45 V, with a cutoff rate of 0.05 C; then, conducting the nail penetration test on the fully charged battery cell, during the test, the battery cell was placed with its deep groove facing upward, and completely penetrated by using a steel nail with a diameter of 4.0 mm at a speed of 40 mm/s, and the locations for nail penetration were the left, middle, and right positions of the largest surface of the battery cell (5 battery cells were tested at each location); and maintaining the penetration for 1 hour, and if no fire or explosion of the battery cell occurred, the test was considered passed.

Method of 132°C/136°C thermal chamber test: discharging a battery cell at a constant current of 0.2 C to 3 V at room temperature, then settling for 5 minutes; charging the battery cell at a constant current of 1.0 C to 4.45 V, with a cutoff rate of 0.05 C; and after that, conducting the thermal chamber test on the fully charged battery cell, during the test, the battery cell was suspended in an oven whose temperature was increased at a rate of 5±2 °C/min to 132°C or 136°C, and maintained for 60 minutes before stopping test, a temperature of the battery cell surface, an ambient temperature, and a voltage were monitored, and if no fire or explosion of the battery cell occurred, the test was considered passed.

Method for testing low-temperature discharge performance: discharging a battery cell at a constant current of 1 C to 3 V, and settling for 5 minutes; setting the temperature chamber to 25 °C, and placing the battery cell in the temperature chamber and settling for 60 minutes; charging the battery cell at a constant current of 1.0 C to 4.45 V, with a cutoff rate of 0.02 C, and settling for 5 minutes; discharging the battery cell at a constant current of 0.2 C to 3 V, and recording the capacity at this point as the initial capacity C₀; setting the temperature chamber to 25 °C, and settling the battery cell for 60 minutes; charging the battery cell at a constant current of 1.0 C to 4.45 V, with a cutoff rate of 0.02 C, and settling for 5 minutes; setting the temperature chamber to -10 °C, and settling the battery cell for 120 minutes; and discharging the battery cell at 0.2 C to 3.0 V, recording the capacities discharged to 3.4 V and 3.0 V as C₁ and C₂, respectively, and wherein the ratio of C₁ to C₀ represented the capacity retention rate at -10 °C when discharged to 3.4 V.

Method for testing rate discharge performance: discharging a battery cell at a constant current of 1 C to 3 V, and settling for 5 minutes; charging the battery cell at a constant current of 1.0 C to 4.45 V, with a cutoff rate of 0.02 C, and settling for 5 minutes; discharging the battery cell at a constant current of 0.2 C to 3 V, recording the capacity at this point as the initial capacity C₃; charging the battery cell at a constant current of 1.0 C to 4.45 V, with a cutoff rate of 0.02 C, and settling for 5 minutes; and discharging the battery cell at 0.2 C to 3.0 V, recording the capacities discharged to 3.4 V and 3.0 V as C₄ and C₅, respectively and wherein the ratio of C₄ to C₃ represented the capacity retention rate when discharged to 3.4 V at 2 C.

Method for testing cycling performance: under ambient temperature of 25±2°C, discharging a battery cell at a constant current of 0.2 C to 3.0 V, then charging at a constant current of 3 C to 4.45 V, with a cutoff rate of 0.05 C; and recording the voltage, internal resistance, capacity, and thickness (measured with 600 g PPG) of the fully charged battery cell at the first time. The cycling process followed the HFC protocol as follows: discharging at a constant current of 0.2 C to 3 V; charging at a constant current of 3.0 C to 4.25 V; charging at a constant current of 2.5 C to 4.25 V; charging at a constant current of 2.0 C to 4.45 V; charging at a constant current of 1.4 C to 4.50 V, with a cutoff rate of 0.3 C; charging at a constant current of 2 A to 4.45 V, with a cutoff rate of 0.05 C; and discharging at a constant current of 1.0 C to 3 V. One cycle was recorded by completing the above steps. After 49 cycles, a low-current recovery protocol was conducted as followed: charging at a constant current of 3.0 C to 4.25 V; charging at a constant current of 2.5 C to 4.25 V; charging at a constant current of 2.0 C to 4.45 V; charging at a constant current of 1.4 C to 4.50 V, with a cutoff rate of 0.3 C; charging at a constant current of 2 A to 4.45 V, with a cutoff rate of 0.05 C; discharging at a constant current of 0.2 C to 3 V; charging at a constant current of 3.0 C to 4.45 V, with a cutoff rate of 0.05 C. Every 100 cycles, the voltage, internal resistance, and thickness (measured with 600 g PPG) of the fully charged battery cell were recorded.

The parameters of Examples 1-15 and Comparative Examples 1-7 were shown in Table 1 below:

**Table 1**

| | C_{w} (m g/15 40.2 5 mm ²) | a (m Ah ) | k | C₁ (m Ah ) | C₀ (mA h) | Coatin g areal densit y of the positiv e electro de mg/15 40.25 mm² | Gram capacity of positive electrod e active material (mAh ) | C₂ (mAh ) | N/P (C₀/C₂ ) | NP₁ | C₀*C₁/ (C₂* (C₁+C 2)) | ΔNP |
|---|---|---|---|---|---|---|---|---|---|---|---|---|
| Example 1 | 9 | 170 | 0.306 | 468 | 25750 | 214 | 180 | 24409 | 1.055 | 1.040 | 0.020 | 0.015 |
| Example 2 | 9 | 170 | 0.306 | 468 | 25750 | 218 | 180 | 24865 | 1.036 | 1.021 | 0.019 | 0.014 |
| Example 3 | 9 | 170 | 0.306 | 468 | 25750 | 208.5 | 180 | 23781 | 1.083 | 1.067 | 0.021 | 0.016 |
| Example 4 | 18 | 170 | 0.306 | 936 | 25750 | 200 | 180 | 22812 | 1.129 | 1.089 | 0.045 | 0.040 |
| Example 5 | 3 | 170 | 0.306 | 156 | 25750 | 214 | 180 | 24409 | 1.055 | 1.053 | 0.007 | 0.002 |
| Example 6 | 6 | 170 | 0.306 | 312 | 25750 | 214 | 180 | 24409 | 1.055 | 1.047 | 0.013 | 0.008 |
| Example 7 | 12 | 170 | 0.306 | 624 | 25750 | 214 | 180 | 24409 | 1.055 | 1.034 | 0.026 | 0.021 |
| Example 8 | 18 | 170 | 0.306 | 936 | 25750 | 214 | 180 | 24409 | 1.055 | 1.021 | 0.039 | 0.034 |
| Example 9 | 9 | 170 | 0.306 | 468 | 25750 | 214 | 180 | 24409 | 1.055 | 1.040 | 0.020 | 0.015 |
| Example 10 | 9 | 274 | 0.399 | 984 | 25750 | 214 | 180 | 24409 | 1.055 | 1.019 | 0.041 | 0.036 |
| Example 11 | 9 | 170 | 0.306 | 468 | 25750 | 214 | 180 | 24409 | 1.055 | 1.040 | 0.020 | 0.015 |
| Example 12 | 9 | 170 | 0.306 | 468 | 25750 | 214 | 180 | 24409 | 1.055 | 1.040 | 0.020 | 0.015 |
| Example 13 | 9 | 170 | 0.306 | 468 | 25750 | 214 | 180 | 24409 | 1.055 | 1.040 | 0.020 | 0.015 |
| Example 14 | 9 | 170 | 0.306 | 468 | 25750 | 214 | 180 | 24409 | 1.055 | 1.040 | 0.020 | 0.015 |
| Example 15 | 9 | 170 | 0.306 | 468 | 25750 | 214 | 180 | 24409 | 1.055 | 1.040 | 0.020 | 0.015 |
| Comparati ve Example 1 | 30 | 170 | 0.306 | 156 1 | 25750 | 200 | 180 | 22812 | 1.129 | 1.062 | 0.072 | 0.067 |
| Comparati ve Example 2 | 2.5 | 170 | 0.306 | 130 | 25750 | 214 | 180 | 24409 | 1.055 | 1.054 | 0.006 | 0.001 |
| Comparati ve Example 3 | 18 | 170 | 0.306 | 936 | 25750 | 218 | 180 | 24865 | 1.036 | 1.003 | 0.038 | 0.033 |
| Comparati ve Example 4 | 9 | 170 | 0.306 | 468 | 25750 | 202.5 | 180 | 23097 | 1.115 | 1.098 | 0.022 | 0.017 |
| Comparati ve Example 5 | 9 | / | / | 0 | 25750 | 214 | 180.5 | 24477 | 1.052 | 1.052 | 0.000 | 0.000 |
| Comparati ve Example 6 | 9 | 170 | 0.306 | 468 | 25750 | 214 | 180 | 24409 | 1.055 | 1.040 | 0.020 | 0.015 |
| Comparati ve Example 7 | / | / | / | 0 | 25750 | 214 | 180.5 | 24477 | 1.052 | 1.052 | 0.000 | 0.000 |

The test results of Examples 1-15 and Comparative Examples 1-7 were shown in Table 2 below:

**Table 2**

| | Nail penetratio n test | 132°C thermal chamber | 136°C thermal chamber | low-temperature performance (3.4V@-10°C) | Rate performance (3.4V@2.0C) | Cycling performance (RT@800cycles) |
|---|---|---|---|---|---|---|
| Example 1 | 15/15 | 10/10 | 10/10 | 72.6% | 74.8% | 92.1% |
| Example 2 | 15/15 | 10/10 | 10/10 | 71.5% | 73.2% | 91.1% |
| Example 3 | 15/15 | 10/10 | 10/10 | 71.2% | 72.8% | 90.8% |
| Example 4 | 15/15 | 10/10 | 10/10 | 71.5% | 72.1% | 90.5% |
| Example 5 | 15/15 | 10/10 | 10/10 | 72.5% | 74.1% | 91.9% |
| Example 6 | 15/15 | 10/10 | 10/10 | 72.3% | 74.3% | 92.0% |
| Example 7 | 15/15 | 10/10 | 10/10 | 72.3% | 73.5% | 91.7% |
| Example 8 | 15/15 | 10/10 | 10/10 | 71.3% | 73.0% | 91.0% |
| Example 9 | 15/15 | 10/10 | 10/10 | 72.4% | 74.5% | 91.1% |
| Example 10 | 14/15 | 10/10 | 9/10 | 72.0% | 73.8% | 91.2% |
| Example 11 | 15/15 | 10/10 | 10/10 | 72.1% | 74.1% | 91.8% |
| Example 12 | 15/15 | 10/10 | 10/10 | 72.6% | 74.7% | 91.9% |
| Example 13 | 15/15 | 10/10 | 10/10 | 72.3% | 74.6% | 91.7% |
| Example 14 | 12/15 | 10/10 | 10/10 | 72.3% | 71.8% | 91.8% |
| Example 15 | 15/15 | 10/10 | 10/10 | 71.7% | 72.5% | 91.4% |
| Comparat ive Example 1 | 15/15 | 10/10 | 10/10 | 70.6% | 72.8% | 91.1% |
| Comparat ive Example 2 | 13/15 | 10/10 | 10/10 | 71.5% | 72.3% | 91.6% |
| Comparat ive Example 3 | 15/15 | 10/10 | 10/10 | 70.9% | 69.1% | 65.3% |
| Comparat ive Example 4 | 15/15 | 10/10 | 5/10 | 71.4% | 72.2% | 82.1% |
| Comparat ive Example 5 | 15/15 | 10/10 | 6/10 | 71.2% | 73.5% | 90.3% |
| Comparat ive Example 6 | 14/15 | 10/10 | 9/10 | 72.3% | 73.5% | 91.2% |
| Comparat ive Example 7 | 0/15 | 10/10 | 0/10 | 69.5% | 69.9% | 89.8% |

From the parameter set in Table 1 and Table 2 and the comparison of battery cell test results, it can be seen that compared to Comparative Examples 1-7, since the safety coatings in Examples 1-15 satisfy 0.002 ≤ ΔNP ≤ 0.04, and 1.019 ≤ NP₁ ≤ 1.089, the penetration performances of the obtained battery cells are significant improved, the pass rate of nail penetration test increases from 0% to 80% or more, the thermal chamber temperature increases by 4°C, and improvements are also observed in low-temperature discharge performance, rate discharge performance, and cycling performance. Moreover, the capacity retention rates after 800 cycles at 25 °C are not less than 90%, the discharge capacities at -10 °C are not less than 70% @ 3.4 V, and the discharge capacities at 2.0 C are not less than 70% @ 3.4 V.

From Comparative Example 1, it can be seen that although the performance of the battery cell does not exhibit significant deterioration compared to Example 1, the ΔNP is 0.067, and the c_{w} is 30 mg/1540.25 mm², which leads to a reduction in energy density and poorer practicality.

From Comparative Example 2, it can be seen that the ΔNP is only 0.001, and the corresponding c_{w} is 2.5 mg/1540.25 mm², which indicates that a high precision is required during coating and a deterioration occurs in penetration performance.

From Comparative Example 3, it can be seen that the NP₁ is only 1.003, indicating an insufficient negative electrode capacity margin. The lithium plating is easy to occur during cycling, which can lead to sudden and rapid failure of battery cell cycle life.

From Comparative Example 4, it can be seen that the NP₁ is 1.098, which indicates that a higher potential when fully charged, and deterioration in both thermal chamber performance and cycling performance.

Comparative Examples 5-7 indicate that the absence of the first active material or dispersant in the safety coating, or the absence of the safety coating, leads to a decline in battery cell performance.

In summary, the safety coating provided by the present disclosure contains the first active material. By limiting the coating areal density of the first active material and the capacity contributed by the first active material, the mechanical safety performance, thermal abuse performance, and cycling performance of the battery cell can be enhanced, and the low-temperature discharge performance and rate discharge performance of the battery can be improved. For the battery cell provided by the present disclosure, when the safety coating satisfies 0.002 ≤ ΔNP ≤ 0.04 and 1.019 ≤ NP₁ ≤ 1.089, a pass rate of nail penetration test greater than 80%, a thermal chamber temperature increase of 4°C, a capacity retention rate of not less than 90% after 800 cycles at 25 °C, a discharge capacity of not less than 70% @ 3.4 V at -10 °C, and a discharge capacity of not less than 70% @ 3.4 V at 2.0 C can be achieved.

The above-described examples only express several implementation modes of the present disclosure. The descriptions are specific and detailed but should not be considered as limiting the scope of the present disclosure. It should be noted that for those skilled in the art, several modifications and improvements can be made without departing from the spirit of the disclosure, all of which fall within the protection scope of the present disclosure.

## Claims

1. A battery cell comprising a positive electrode sheet and a negative electrode sheet;
wherein the positive electrode sheet comprises a safety coating and a positive electrode active material layer; the safety coating comprises a first active material and a dispersant, and the positive electrode active material layer comprises a positive electrode active material;
the negative electrode sheet comprises a negative electrode active material layer, and the negative electrode active material layer comprises a negative electrode active material;
the battery cell has a first capacity ratio NP1 satisfying 1.019 ≤ NP₁ ≤ 1.089 and a relative capacity ratio ΔNP satisfying 0.002 ≤ ΔNP ≤ 0.04;
a calculation formula for the first capacity ratio NP₁ is: NP₁ = C₀/C₂ - ΔNP, and a calculation formula for the relative capacity ratio ΔNP is: ΔNP = C₀ X C₁/ (C₂ X (C₁+C₂))-0.05;
C₁ is a capacity contributed by the first active material in the safety coating per unit area, calculated as: C₁ = k×c_{w} ×a, where 0 < k < 1, 0 < a ≤ 300, c_{w} is a single-sided coating areal density of the safety coating, a is a theoretical gram capacity of the first active material, and k is a constant;
C₂ is a capacity contributed by the positive electrode active material in the positive electrode active material layer per unit area; and
C₀ is a capacity contributed by the negative electrode active material in the negative electrode active material layer per unit area.

2. The battery cell according to claim 1, wherein the first active material comprises one or more of lithium cobalt oxide, lithium manganese oxide, lithium iron phosphate, lithium manganese iron phosphate, and a ternary material; and/or,
the first active material has a median particle size Dᵥ₅₀ of 0.1 µm to 15 µm, and a specific surface area of 2 to 50 m²/g.

3. The battery cell according to claim 2, comprising at least one of the following:
A1) the first active material is a ternary material, which comprises at least one of a nickel-cobalt-manganese ternary material and a nickel-cobalt-aluminum ternary material;
A2) when A1) is included, the nickel-cobalt-manganese ternary material comprises at least one of NCM333, NCM523, NCM613, NCM622, and NCM811;
A3) a surface of the first active material is coated with an inorganic ceramic material; and
A4) when A3) is included, the inorganic ceramic material comprises silicon dioxide, aluminium oxide, or titanium oxide.

4. The battery cell according to claim 1, wherein the dispersant comprises one or more of an ionic dispersant, a non-ionic dispersant, an amphoteric dispersant, and a fluorinated surfactant.

5. The battery cell according to claim 4, wherein the ionic dispersant comprises one or more of polyacrylic acid and salts thereof, sodium dodecyl benzene sulfonate, sodium dodecyl sulfate, and polyethyleneimine; and/or,
the non-ionic dispersant comprises one or more of polyvinyl pyrrolidone, polyethylene glycol, polyvinyl alcohol, polyethylene oxide, and carboxymethyl cellulose; and/or,
the amphoteric dispersant comprises betaine.

6. The battery cell according to claim 1, wherein the safety coating further comprises a first conductive agent, a first binder, and an inorganic filler; and the safety coating satisfies at least one of the following:
B1) a mass ratio of the first conductive agent, the first binder, the inorganic filler, the first active material, and the dispersant is 0.5-5: 1-21.2: 1-50: 1-95: 0.01-1;
B2) the inorganic filler has a median particle size Dᵥ₅₀ of 0.1 µm to 5 µm, and a specific surface area of 8 m²/g to 15 m²/g;
B3) the inorganic filler comprises one or more of aluminium oxide, boehmite, aluminum hydroxide, magnesium hydroxide, silicon dioxide, and titanium dioxide; and
B4) the first binder comprises one or more of a polyvinylidene fluoride binder, a sodium carboxymethyl cellulose binder, and a polyacrylate-based binder.

7. The battery cell according to claim 6, wherein the first binder is a polyacrylate-based binder, with a structural formula of: 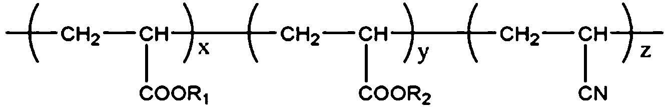
wherein, R₁ is independently H, Li, or Na at each occurrence;
R₂ is independently substituted or unsubstituted C₁~C₁₀ alkyl at each occurrence;
5 ≤ (x + z)/ y ≤ 20, 1.2 ≤ z/ x ≤ 2, where x, y, z are not 0; and/or
the polyacrylate-based binder has a weight-average molecular weight M_{w} of 200,000 to 500,000, a number-average molecular weight Mₙ of 100,000 to 400,000; and/or
a ratio of the weight-average molecular weight M_{w} to the number-average molecular weight Mₙ of the polyacrylate-based binder satisfies M_{w}/Mₙ ≤ 3; and/or
the polyacrylate-based binder has an electrolytic solution absorption rate at 80 °C of 10% to 50%; and/or
the safety coating has a mass fraction of polyacrylate-based binder of 1 % to 21.2 %.

8. The battery cell according to claim 1, wherein the positive electrode sheet further comprises a positive electrode current collector, the safety coating is coated on at least one side surface of the positive electrode current collector, and the positive electrode active material layer is coated on one side surface of the safety coating facing away from the positive electrode current collector or on one side surface of the positive electrode current collector facing away from the safety coating; the negative electrode sheet further comprises a negative electrode current collector, and the negative electrode active material layer is coated on at least one side surface of the negative electrode current collector; and/or,
the safety coating has a single-sided coating areal density of 3 mg/1540.25 mm² to 18 mg/1540.25 mm².

9. The battery cell according to claim 8, wherein the safety coating is coated on both side surfaces of the positive electrode current collector; and the safety coating satisfies at least one of the following:
C1) the safety coating has a double-sided thickness of 1 µm to 20 µm;
C2) the safety coating has a double-sided film resistance tested at a pressure of 0.4 t of 0.5 Ω to 5 Ω;
C3) the safety coating has a relationship between the double-sided thickness "d" and the double-sided film resistance "R" at a pressure of 0.4 t satisfying: 2 ≤ R ×d ≤ 50; and
C4) along a direction perpendicular to an unwinding direction of the positive electrode current collector, a distance W_{A1} between a left edge of the safety coating on Side A of the positive electrode current collector and a left edge of the positive electrode current collector ranges from 2 mm to 30 mm, and a distance W_{A2} between a right edge of the safety coating on Side A of the positive electrode current collector and a right edge of the positive electrode current collector ranges from 2 mm to 30 mm; a distance W_{B1} between a left edge of the safety coating on Side B of the positive electrode current collector and a left edge of the current collector ranges from 3 mm to 30 mm, and a distance W_{B2} between a right edge of the safety coating on Side B of the positive electrode current collector and a right edge of the positive electrode current collector ranges from 3 mm to 30 mm; where W_{B1} - W_{A1} ≥ 1 mm, and W_{B2} - W_{A2} ≥ 1 mm.

10. A method for preparing the battery cell according to any of claims 1-9, comprising the following steps:
mixing raw materials for preparing the safety coating in a solvent to obtain a safety coating slurry;
coating the safety coating slurry on at least one side surface of a positive electrode current collector to obtain a positive electrode current collector comprising a safety coating;
coating a positive electrode active material layer on one side surface of the safety coating facing away from the positive electrode current collector or on one side surface of the positive electrode current collector facing away from the safety coating to obtain a positive electrode sheet;
coating a negative electrode active material layer on a negative electrode current collector to obtain a negative electrode sheet; and
assembling the positive electrode sheet and the negative electrode sheet to obtain the battery cell.

11. The method for preparing the battery cell according to claim 10, comprising at least one of the following:
D1) the safety coating slurry has a solid content of ≥10%;
D2) the safety coating slurry has a viscosity of ≥50 mPa·s;
D3) the positive electrode current collector has a dyne value of ≥30 dyn/cm;
D4) the safety coating slurry is coated onto one side surface or both side surfaces of the positive electrode current collector using gravure printing; and
D5) when D4) is included, a temperature of an oven during the gravure printing is 90 °C to 110 °C, and a printing speed is 10 m/min to50 m/min.

12. A lithium-ion battery comprising the battery cell a according to any of claims 1-9 or the battery cell obtained by the method according to any of claims 10-11.

13. Use of the lithium-ion battery according to claim 12 in an energy storage device, an electrical device, or an electronic equipment.
